# EUROPEAN PATENT APPLICATION

(11) **EP 4 741 183 A1**
(43) Date of publication of application: **13.05.2026**
(21) Application number: 24275119.6
(22) Date of filing: 06.11.2024
(51) Int. Cl.: B60G 17/0165, B60G 3/20

(54) **A VEHICLE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A vehicle (100) comprising a chassis (200), a chassis suspension system (400) configured to support the chassis (200) relative to a substrate (500) and a control system (600). The control system (600) is operable to: receive a command to achieve a first objective and determine a first chassis suspension system configuration required to achieve the first objective. The first chassis suspension system configuration is defined by a relative orientation of each of the wheel arms (402) relative to the chassis (200) and a relative orientation of each drive wheel mounting member (416) relative to its respective wheel arm (402). The control system (600) is operable to operate one or more of the wheel arm actuators (430) and drive wheel mounting member actuators (440) to achieve the first chassis suspension system configuration.

## Description

### FIELD

The present disclosure relates to a vehicle.

### BACKGROUND

There is an increasing need for vehicles which are able to travel across a wide variety of terrains to achieve a given objective. For example, wheeled vehicles with adjustable suspension systems are known which can travel across a wide variety of terrains.

Even with suspension systems which are configured to achieve a desired performance, significant control input to control the suspension system and/or vehicle drive system may be required to actually achieve the given objective.

This is especially problematic for a remotely operated and/or autonomous vehicle, where a remote user may not be able to provide accurate instructions, for example because it may be impossible for a user to appreciate all of the factors which are posing a challenge to the successful operation of the vehicle.

Hence a remotely operated and/or autonomous vehicle which is operable to overcome the limitations of conventional vehicles when travelling across a wide range of terrains, is highly desirable.

### SUMMARY

According to the present disclosure there is provided an apparatus and system as set forth in the appended claims. Other features of the invention will be apparent from the dependent claims, and the description which follows.

Accordingly there may be provided a vehicle (100) comprising a chassis (200) and a chassis suspension system (400). The chassis suspension system (400) may be configured to support the chassis (200) relative to a substrate (500). The chassis (200) may comprise a plurality of wheel arms (402), each wheel arm (402) extending away from a different chassis mount (220) on the chassis (200) to a respective drive wheel (404). Each drive wheel (404) may be being pivotably mounted relative to its respective wheel arm (402).

Each wheel arm (402) may have a chassis mount end (410) and a drive wheel mount end (412). The chassis mount end (410) of each wheel arm (402) may be provided with a chassis mounting member (414). Each chassis mounting member (414) may be provided with a chassis mounting member actuator (442) to control the orientation of each wheel arm (402) relative to the chassis (200). Each wheel arm (402) may be provided with a wheel arm actuator (430) to control the orientation of each wheel arm (402) relative to the chassis (200). The drive wheel mount end (412) of each wheel arm (402) may be provided with a drive wheel mounting member (416). Each drive wheel mounting member (416) may be provided with a drive wheel mounting member actuator (440) to control the orientation of each drive wheel (404) relative to its respective wheel arm (402).

The vehicle may further comprise a control system (600).

The control system (600) may be operable to receive a command to achieve a first objective.

The control system (600) may be operable to determine a first chassis suspension system configuration required to achieve the first objective, wherein the first chassis suspension system configuration is defined by a relative orientation of each of the wheel arms (402) relative to the chassis (200) and a relative orientation of each drive wheel mounting member (416) relative to its respective wheel arm (402).

The control system (600) may be operable to operate one or more of the chassis mounting member actuators (442), wheel arm actuators (430) and drive wheel mounting member actuators (440) to achieve the first chassis suspension system configuration.

The control system (600) may be operable to determine a first sequence of chassis suspension system configurations required to achieve the first objective, wherein each chassis suspension system configuration is defined by a relative orientation of each of the wheel arms (402) relative to the chassis (200) and a relative orientation of each drive wheel mounting member (416) relative to its respective wheel arm (402).

The control system (600) may be operable to operate one or more of the chassis mounting member actuators (442), wheel arm actuators (430) and drive wheel mounting member actuators (440) to perform the first sequence of chassis suspension system configurations.

The control system (600) may be operable to control the path taken by the respective wheel arm (402) relative to the chassis (200) during a motion of the wheel arm (402) between consecutive chassis suspension system configurations and/or operable to control the relative positioning of the drive wheel mounting member (416) relative to its respective wheel arm (402) during the motion of the respective wheel arm (402).

The control system (600) may be operable to determine a **number n** of chassis displacement motions required to achieve the first objective, where the **number n** has a value of at least one, and the or each chassis displacement motion is defined by a relative movement of the chassis (200) relative to the substrate (500).

Each drive wheel (404) may be coupled to a drive wheel actuator (702) configured to drive the drive wheel (404) about a rotational axis (408).

The control system (600) may be operable to operate one or more of the chassis mounting member actuators (442), wheel arm actuators (430), drive wheel mounting member actuators (440) and/or drive wheel actuator (702) to perform a chassis displacement motion while the vehicle is in one or more of the chassis suspension system configurations.

The control system (600) may be operable to operate one or more of the chassis mounting member actuators (442), wheel arm actuators (430), drive wheel mounting member actuators (440) and/or drive wheel actuator (702) to achieve a chassis displacement motion during the motion of the respective wheel arm (402).

The chassis (200) may extend along an x-axis, a first end (202) of the chassis (200) and a second end (204) of the chassis (200) spaced apart from one another along the x-axis. The chassis (200) may extend along a y-axis, a first side (206) of the chassis (200) and a second side (208) of the chassis (200) spaced apart from one another along the y-axis. The x-axis may be at right angles to the y-axis. The x-axis may define a chassis roll axis (210), the y-axis defining a chassis pitch axis (212) and a z-axis defining a chassis yaw axis (214). The z-axis being perpendicular to the x-axis and y-axis. The control system (600) may be operable to control the transition between each consecutive chassis suspension system configuration to include rolling the chassis (200) about the roll axis (210), pitching the chassis (200) about the pitch axis (212) and/or yawing the chassis (200) about the yaw axis (214).

The control system may be operable to determine whether the first objective has been achieved.

The control system may be operable to record and/or transmit a signal indicating the result of the determination whether the first objective has been achieved.

The first objective may be to position the vehicle (100) at an orientation relative to a target object.

The vehicle (100) may further comprise a gun barrel (300) having a barrel axis (302). The barrel (300) may be mounted to the chassis (200) by a pivot mount (304). The barrel (300) may be pivotable relative to the x-axis about a pivot axis (310) aligned with the y-axis and mounted such that it is constrained to move in a plane defined by the x-axis and z-axis. The first objective is to position the barrel (300) towards an orientation to target an object.

The first objective may be to locate the vehicle (100) inside a container (900).

The first objective may be to locate the vehicle (100) inside a building.

The first objective may be to for the vehicle (100) to climb a step.

The first objective may be to for the vehicle (100) to cross a gap (906) in the substrate.

The chassis mount end (410) of each wheel arm (402) and the chassis mounting member (414) maybe pivotable relative to one another around a chassis mount pivoting axis (230). The chassis mounting member (414) may be configured to support the chassis mount end (410) of the wheel arm (402) so that the wheel arm (402) and chassis mounting member (414) are operable to pivot relative to one another about the chassis mount pivoting axis (230).

The drive wheel mount end (412) of each wheel arm (402) and drive wheel mounting member (416) may be pivotable relative to one another around a drive wheel mount pivoting axis (432). Each drive wheel mounting member (416) may be configured to couple with the drive wheel mount end (412) of the wheel arm

(402) so that each wheel arm (402) and drive wheel mounting member (416) are operable to pivot relative to one another about the drive wheel mount pivoting axis (432).

The chassis mount pivoting axis (230) may be parallel to the wheel mount pivoting axis (432). The chassis mount pivoting axis (230) may be aligned and/or parallel to the z-axis.

The chassis mount end (410) of the wheel arm (402) may be rotatably mounted relative to the chassis (200) such that the wheel arm (402) is rotatable about a chassis suspension axis (450) which extends at right angles to the chassis mount pivoting axis (230).

The wheel mount end (412) of the wheel arm (402) may be rotatably mounted relative to the wheel (404) such that the wheel arm (402) may rotate about a wheel suspension axis (250) which extends at right angles to the wheel mount pivoting axis (432).

The drive wheel rotational axis (408), chassis suspension axis (450) and/or wheel suspension axis (250) may be parallel to and/or aligned with an x-y plane defined by the x-axis and y-axis.

Hence there may be provided a remotely operated and/or autonomous vehicle which is operable to overcome the limitations of conventional vehicles when travelling across a wide range of terrains.

### BRIEF DESCRIPTION OF THE FIGURES

Embodiments of the invention will now be described by way of example only with reference to the figures, in which:
Figures 1 to 3 shows a side view, plan view and end view of a chassis of a vehicle according to the present disclosure;
Figures 4 to 8 show views of the wheel arms and wheel assembly according to the present disclosure;
Figures 9 to 13 illustrate different views and functionality of the vehicle of the present disclosure;
Figures 14, 15 show a plan view of the vehicle of the present disclosure in a first mode of operation;
Figures 16, 17 show a plan view and side view of a vehicle of the present disclosure configured as a weapons system;
Figures 18 to 29 illustrate a second mode of operation of the vehicle of the present disclosure;
Figures 30 to 36 illustrate a third mode of operation of the vehicle of the present disclosure;
Figures 37 to 41 illustrate a fourth mode of operation of the vehicle of the present disclosure;
Figures 42 to 48 illustrate a fifth mode of operation of the vehicle of the present disclosure;
Figures 49 to 60 illustrate a sixth mode of operation of the vehicle of the present disclosure; and
Figure 61 illustrates a seventh mode of operation of the vehicle of the present disclosure.

### DETAILED DESCRIPTION

The present disclosure relates to a vehicle. The vehicle may be an autonomous vehicle. The vehicle may be a self-propelled vehicle.

In the present disclosure, the term *"autonomous vehicle"* may be understood to include a driverless vehicle, for example an uncrewed vehicle. The term *"autonomous vehicle"* may be understood to include a vehicle which is not carrying people nor operated by one or more users within the vehicle. The term *"autonomous vehicle"* may be understood to include a vehicle which is configured to be operated remotely by a user and/or is operable to perform at least some functions without explicit and/or direct user commands. Hence the term *"autonomous vehicle"* may be understood to mean the vehicle is semi-autonomous, in so far as it may be operable to receive one or more commands and then perform operations to fulfil the commands.

As shown in the figures, any of the examples of vehicles of the present disclosure may comprise a chassis 200 with a chassis suspension system 400. Details of how the chassis suspension system may be operated are illustrated in the figures and herein described.

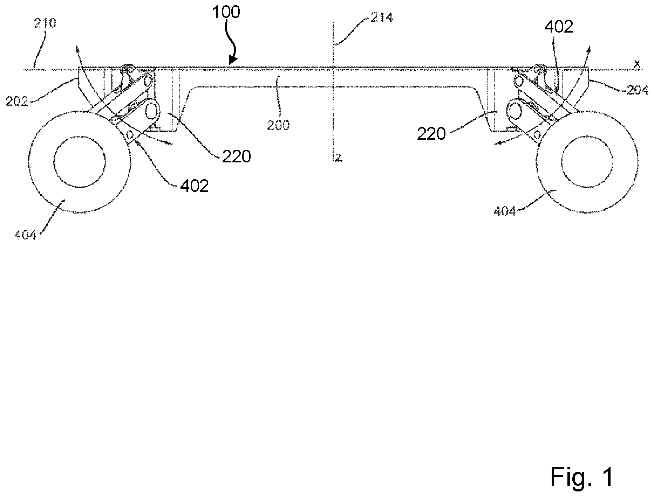

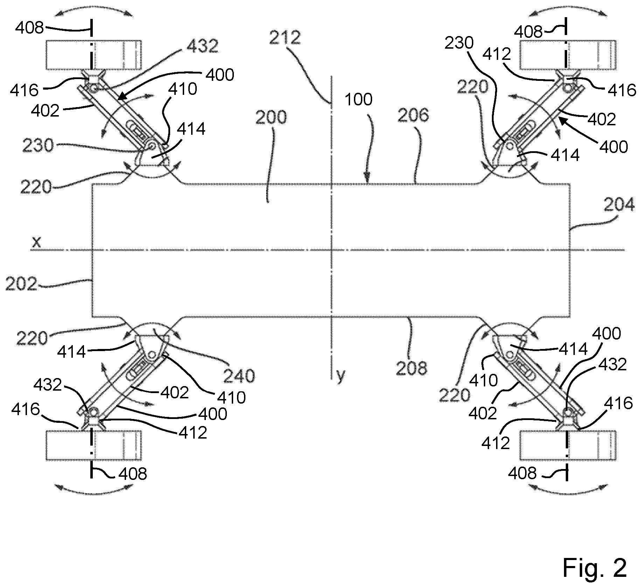

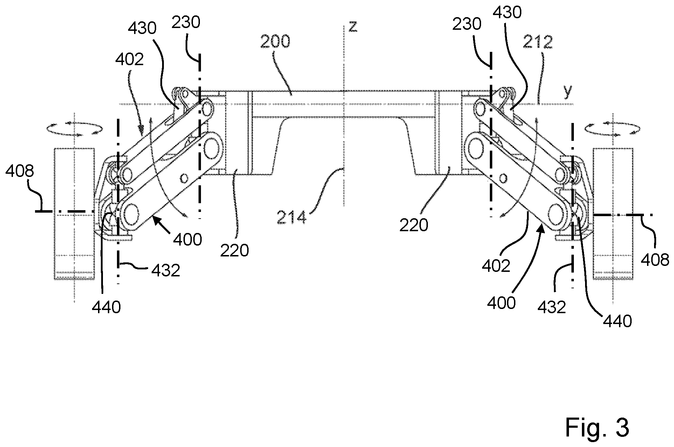

Figure 1 shows a side view of a chassis 200 and chassis suspension system 400 the vehicle 10. Figure 2 shows a plan view of the arrangement shown in figure 1. Figure 3 shows an end view of the arrangement shown in figure 1.

As shown in these figures, the chassis 200 extends along an x-axis, a first end 202 of the chassis 200 and a second end 204 of the chassis 200 spaced apart from one another along the x-axis. The chassis 200 also extends along a y-axis, a first side 206 of the chassis 200 and a second side 208 of the chassis 200 spaced apart from one another along the y-axis. The x-axis may be at right angles to the y-axis.

The x-axis may define a chassis roll axis 210. The y-axis may define a chassis pitch axis 212. A z-axis defines may define a chassis yaw axis 214. The z-axis may be perpendicular to the x-axis and y-axis.

The vehicle 10 comprises a chassis suspension system 400. The chassis suspension system 400 may comprise a plurality of wheel arms 402. Each wheel arm 402 may extend away from a different chassis mount 220 on the chassis 200 to a respective wheel 404. Each wheel may be a drive wheel. Each wheel 404 may be pivotably mounted relative to its respective wheel arm 402. Each wheel 404 may be rotatably mounted on its respective wheel arm 402. Each wheel 404 may be configured for engagement with a support medium 500.

Hence each vehicle may comprise a first wheel arm 402-1 and first wheel 404-1, a second wheel arm 402-2 and second wheel 404-2, a third wheel arm 402-3 and third wheel 404-3 and a fourth wheel arm 402-4 and fourth wheel 404-4.

In the examples shown the first wheel arm 402-1 (and first wheel 404-1) and a second wheel arm 402-2 (and second wheel 404-2) may be located at one end of the chassis 200 and the third wheel arm 402-3 (and third wheel 404-3) and a fourth wheel arm 402-4 (and second wheel 404-4) may be located at the other end of the chassis 200.

Each wheel 404 may be rotatable relative to the wheel arm 402. That is to say, each wheel 404 may be rotatable relative to the wheel arm 402 to which it is mounted. Each wheel 404 may be rotatable about a drive wheel rotational axis 408. The drive wheel rotational axis 408 may be parallel to and/or aligned with an x-y plane defined by the x-axis and y-axis.

In the examples shown in the figures there are provided four wheel arms 402 and four wheels 404. There may be provided other examples with greater or fewer wheel arms 402 and wheels 404.

Each wheel 404 may be configured for direct or indirect engagement with a support medium 500 (e.g. a substrate). The support medium 500 may be any terrain consisting of any material. By way of non limiting example, the support medium 500 may be a road surface, any ground surface, solid/firm land, sand, loose stone, a rocky terrain, mud, bog, snow, ice or water.

The or each drive wheel 404 may be configured for direct engagement with the support medium 500. The or each drive wheel 404 may be configured for indirect engagement with the support medium. For example, the or each drive wheel 404 may be configured for indirect engagement with the support medium via a track (not shown).

The or each wheel may be said to be in driving engagement (or "drivable engagement") with the support medium 500 when the drive wheel 404 is directly engaged or indirectly engaged with the support medium 500 such that a force delivered/induced by the drive wheel 404 to the support medium 500 would generate a tractive and/or reaction force to cause, induce and/or urge the chassis 200 of the vehicle 100 to move relative to (e.g. along, through and/or over) the support medium 500.

Put another way, the or each wheel may be said to be in driving engagement (or "drivable engagement") with the support medium 500 when the drive wheel 404 is directly engaged or indirectly engaged with the support medium 500 such that movement of the drive wheel 404 relative to the chassis 200 would generate a force to cause, induce and/or urge the chassis 200 of the vehicle 100 to move relative to (e.g. along, through and/or over) the support medium 500.

Hence whether a drive wheel is in direct contact with the support medium 500 or indirect contact with the support medium 500 (for example the drive wheel is in contact with the support medium 500 via a track), it may be in driving engagement (or "drivable engagement") with the support medium 500.

Put another way, driving engagement enables a force to be exerted on the support medium 500 through and/or by the drive wheel 404 due to rotational torque applied to the drive wheel 404 by the drive system 700.

That is to say, a drive wheel may be in driving engagement with the support medium 500 when the drive wheel 404 exerts a force on the support medium 500 due to the rotational torque applied to the drive wheel 404 by the drive system 700, whether the drive wheel is in direct contact with the support medium 500 or in indirect contact with the support medium 500.

Additionally or alternatively, driving engagement also enables a force to be exerted on the support medium 500 through the drive wheel 404 by pivoting the wheel arm 402 relative to the chassis 200 and/or by pivoting the wheel 404 relative to its respective wheel arm 402.

Put another way, a drive wheel may be in driving engagement with the support medium 500 when the drive wheel 404 exerts a force on the support medium 500 due to the pivoting of the drive wheel 404 relative to its respective wheel arm 402 and/or due to the pivoting of the wheel arm 402 relative to the chassis 200, whether the drive wheel is in direct contact with the support medium 500 or in indirect contact with the support medium 500.

Each wheel arm 402 is pivotable relative to the chassis 200 such that the roll of the chassis 200 about the x-axis, the pitch of the chassis 200 about the y-axis and the yaw of the chassis 200 about the z-axis is controllable by pivoting at least one of the wheel arms 402 relative to the chassis 200. Additionally, each wheel 404 is pivotable relative to its respective wheel arm 402.

Hence each wheel arm 402 may be pivotable relative to the chassis 200 about an axis parallel to the z-axis (as shown in figures 2, 15, 16), may be pivotable relative to the chassis 200 about an axis parallel to the y-axis and/or may be pivotable relative to the chassis 200 about an axis parallel to the x-axis. That is to say, each wheel arm 402 may be pivotable relative to the chassis 200 in a direction having a component parallel to the z-axis, parallel to the y-axis and/or parallel to the x-axis.

Hence in an example in which a wheel arm remains in contact with the ground via its respective wheel, pivoting a wheel arm 402 about the z-axis, will yaw the chassis 200 about the z-axis, pivoting wheel arm 402 about the y-axis will pitch the chassis about the y-axis and pivoting wheel arm 402 about the x-axis will roll the chassis about the x-axis.

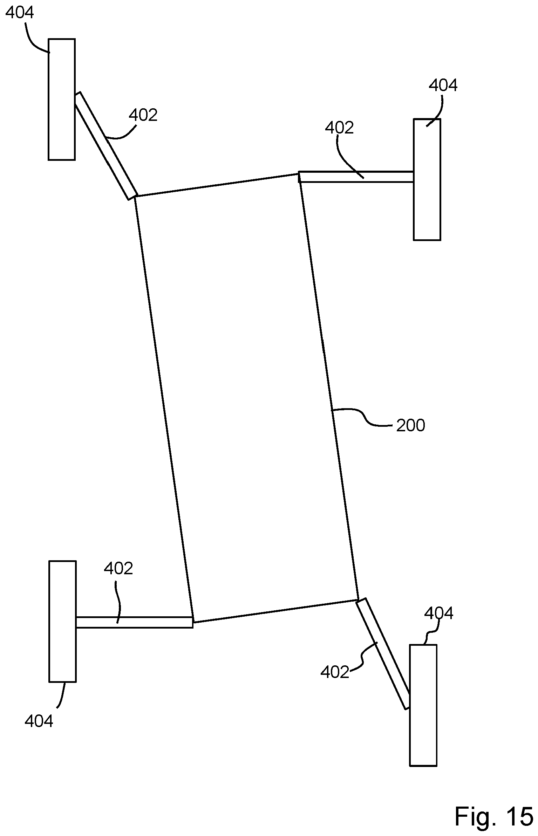

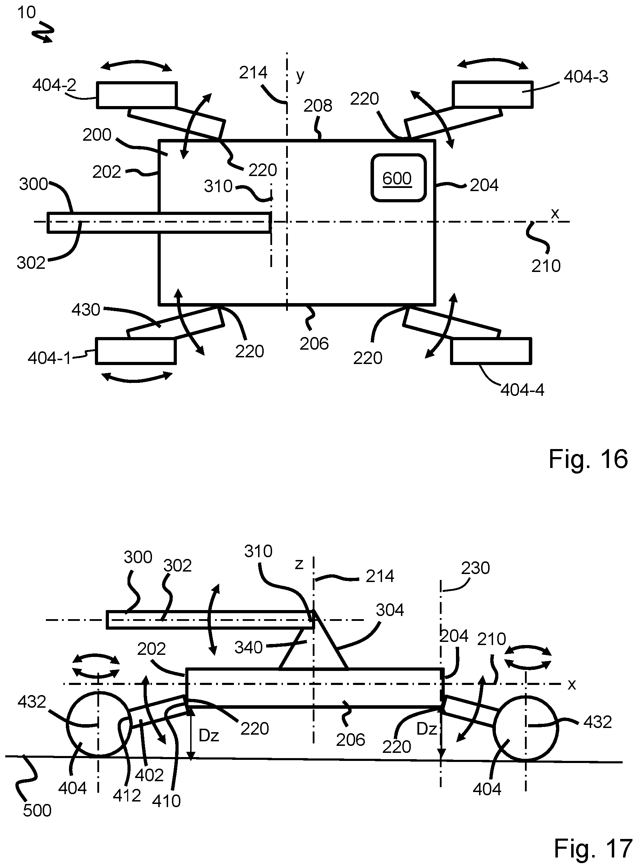

The wheel arm 402 may be coupled to the chassis 200 such that the wheel arm 402 may be pivotable relative to the chassis 200 about an axis parallel to the z-axis (as shown in figures 2, 15) and/or may be pivotable relative to the chassis 200 about an axis in an x-y plane which extends through axes parallel to and/or aligned with the x-axis and y-axis (for example shown in Figures 3, 17). That is to say, each wheel arm 402 may be pivotable relative to the chassis 200 in a direction having a component parallel to the z-axis and/or pivotable relative to an axis in an x-y plane which extends through axes parallel to and/or aligned with the x-axis and y-axis.

Hence in an example in which a wheel arm remains in contact with the ground via its respective wheel, pivoting a wheel arm 402 about the z-axis will yaw the chassis 200 about the z-axis, and pivoting wheel arm 402 about the x-y plane will pitch the chassis about the y-axis and/or roll the chassis about the x-axis.

As shown in the figures, each wheel arm 402 and wheel 404 are configured to be supported by the chassis 200 so that they may be lifted away/apart from the support medium 500. This is enabled by the extent to which the wheel arm is configured to pivot relative to an axis parallel to and/or aligned with the x-y plane.

The vehicle may be operable such that at least one wheel arm 402 and wheel 404 may be configured to be supported by the chassis 200 so that they may be lifted away/apart from the support medium 500 when the chassis 200 is spaced apart from the support medium and/or when the chassis 200 is located on and/or supported by the support medium.

Hence, in some examples, the lowest portion of the wheel 404 (i.e. the part that would be in contact with the support medium) can be raised above the lowest portion of the chassis 200.

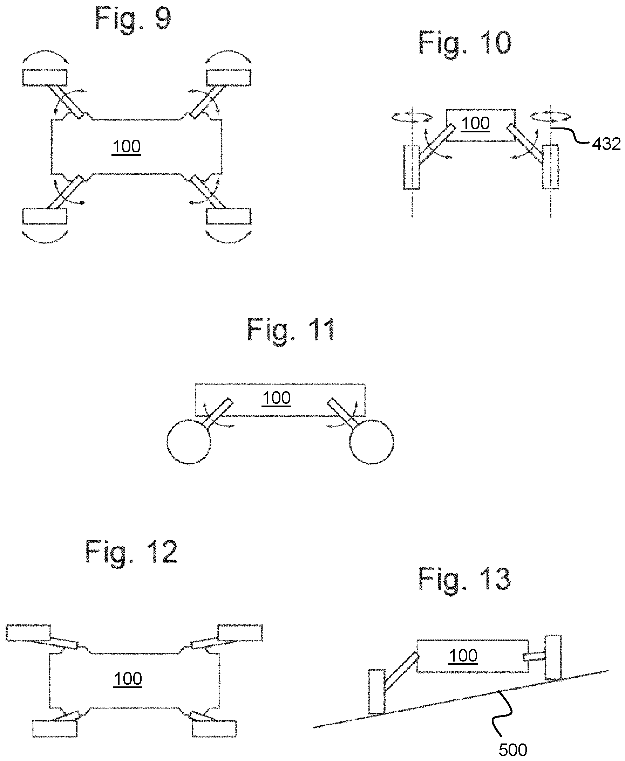

Additionally (as shown in figures 2, 3, 9, 10), each wheel 404 may be pivotable relative to its respective wheel arm 402 to thereby change the angle of one or more of the wheels 404 relative to its respective wheel arm 402. Hence, for example, such pivoting of a wheel 404 relative to its respective wheel arm 402 alters the direction which the wheel 404 is aligned such that when the wheel is rotated the chassis/vehicle is steered in a direction dictated by the orientation of the wheel 404 relative to its respective wheel arm 402.

As shown in figures 1, 2, 9 to 13, each wheel arm 402 and wheel 404 are configured to support the chassis 200 apart from the support medium 500. Each wheel arm 402 and wheel 404 may be configured to support the chassis 200 apart from the support medium 500 in the direction of the z-axis. Each wheel arm 402 and wheel 404 may be configured to support the chassis 200 a distance Dz apart from the support medium 500 in the z-axis, where the distance Dz can be varied by the suspension system 400, and may vary for different locations on the chassis 200. Hence Dz may vary in value from zero (i.e. in examples in which the chassis is located on (i.e. in contact with, supported by) the support medium, to a higher value in which the chassis is spaced apart from the support medium.

As illustrated, each wheel arm 402 may have a chassis mount end 410 which in use is adjacent to the chassis 200. Each wheel arm 402 may have a wheel mount end 412 to which may be attached one of the wheels 404 for supporting the chassis 200.

The chassis mount end 410 of each wheel arm 402 may be provided with a chassis mounting member 414 (for example a bracket for attaching to the chassis 200), the chassis mount end 410 of each wheel arm 402 and chassis mounting member 414 being pivotable relative to one another around a chassis mount pivoting axis 230. The chassis mounting member 414 may be configured to support (e.g. couple) the chassis mount end 410 of the wheel arm 402 so that the wheel arm 402 and chassis mounting member 414 are operable to pivot at least 180 degrees relative to one another about the chassis mount pivoting axis 230. That is to say, the wheel arm 402 may be mounted to the chassis mount 220 (for example via the chassis mounting member 414) such that the wheel arm 402 is operable to pivot at least 180 degrees relative to the chassis mount 220. The wheel arm 402 and chassis mounting member 414 may be operable to pivot at least 180 degrees but no more than 200 degrees relative to one another. The wheel arm 402 and chassis mounting member 414 may be operable to pivot at least 180 degrees but no more than 190 degrees relative to one another. For example, the chassis mounting member 414 and/or chassis mount 220 may space the chassis end of the wheel arm 402 apart from the chassis 200 so that the wheel arm 402 may be parallel to the chassis 200 (e.g. extending parallel to the x-axis and/or extending in a direction having a component in a direction parallel to the x-axis), or allow the wheel arm 402 to extend from its chassis mount end towards the chassis 200 (e.g. angled 95 degrees relative to the y-axis and/or extending in a direction having a component in a direction angled 95 degrees to the y-axis). The wheel arm 402 and chassis mount 220 may be pivotable relative to one another around an axis parallel to the z axis and/or around a vertical axis. Each chassis mounting member 414 may comprise a universal joint.

A chassis end trunnion 222 may be provided at the chassis mount end 410 of the first wheel arm 402, the chassis end trunnion 222 being pivotably attached to the chassis mounting member 414. The chassis end trunnion 222 and chassis mounting member 414 may be pivotable relative to one another around the chassis mount pivoting axis 230. The chassis mounting member 414 may be configured to support the chassis mount end 410 of the first wheel arm 402 via the chassis end trunnion 222.

Each wheel arm 402 may be provided with a wheel arm actuator 430 to control the orientation of each wheel arm 402 relative to the chassis 200.

The wheel mount end 412 of each wheel arm 402 may be provided with a wheel mounting member 416 (e.g. a bracket) for attaching to one of the wheels 404, the wheel mount end 412 of each wheel arm 402 and wheel mounting member 416 being pivotable relative to one another around a wheel mount pivoting axis 432.

The drive wheel mount end 412 of each wheel arm 402 and drive wheel mounting member 416 may be pivotable relative to one another around a drive wheel mount pivoting axis 432. Each drive wheel mounting member 416 may be configured to couple with the drive wheel mount end 412 of the wheel arm 402 so that each wheel arm 402 and drive wheel mounting member 416 are operable to pivot (for example at least 180 degrees) relative to one another about the drive wheel mount pivoting axis 432.

Each wheel mounting member 416 is configured to couple with the wheel mount end 412 of the wheel arm 402 so that each wheel arm 402 and wheel mounting member 416 (and hence wheel 404) are operable to pivot 180 degrees relative to one another about the wheel mount pivoting axis 432. Each wheel arm 402 and respective wheel mounting member 416 (and hence wheel 404) may be operable to pivot at least 180 degrees but no more than 200 degrees relative to one another about the wheel mount pivoting axis 432. Each wheel arm 402 and respective wheel mounting member 416 (and hence wheel 404) may be operable to pivot at least 180 degrees but no more than 190 degrees relative to one another about the wheel mount pivoting axis 432. Each wheel mounting member 416 may comprise a universal joint 420.

The chassis mount pivoting axis 230 may be parallel to the wheel mount pivoting axis 432. The chassis mount pivoting axis 230 may be aligned with (e.g. parallel to) the z-axis. The drive wheel rotational axis 408 may be perpendicular to the chassis mount pivoting axis 230 and/or the wheel mount pivoting axis 432.

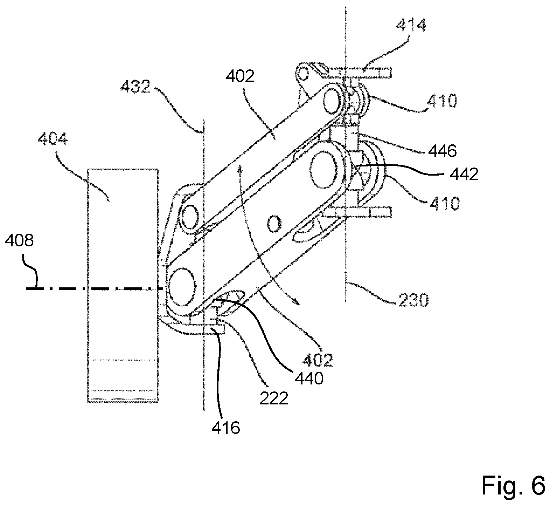

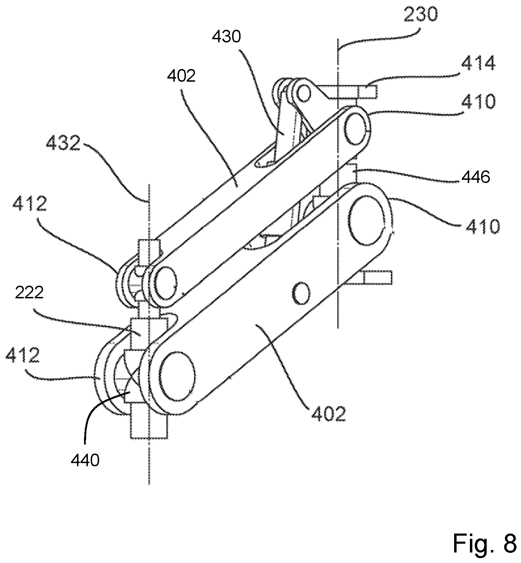

As shown in figures 6 to 8, a chassis end trunnion 446 may be provided at (e.g. coupled to) the chassis mount end 410 of the wheel arm 402. The chassis end trunnion 446 may be pivotably attached to the chassis mounting member 414. The chassis end trunnion 446 and the chassis mounting member 414 may be pivotable relative to one another around the chassis mount pivoting axis 230. The chassis mounting member 414 is configured to support (e.g. couple with) the chassis mount end 410 of the wheel arm 402 via the chassis end trunnion 446 such that a clearance is maintained around the chassis mount end 410 of the wheel arm 402 to provide a space for the chassis mount end 410 of the wheel arm 402 to move through. That is to say, a clearance is maintained between the chassis mount end 410 of the wheel arm 402 and the chassis mounting member 414 and/or the chassis 200 to provide a space for the chassis mount end 410 of the wheel arm end 412 to move through. The chassis end trunnion 446 may be centred on, and pivotable about, the chassis mount pivoting axis 230.

As shown in figures 6 to 8, a wheel end trunnion 222 may be provided at (e.g. coupled with) the wheel mount end 412 of the wheel arm 402. The wheel end trunnion 222 may be pivotably attached to the wheel mounting member 416. The wheel end trunnion 222 and the wheel mounting member 416 may be pivotable relative to one another around the wheel mount pivoting axis 432. The wheel mounting member 416 may be configured to support the wheel mount end 412 of the first wheel arm via the wheel end trunnion 222. The wheel mounting member 416 may be configured to support (e.g. couple with) the wheel mount end 412 of the wheel arm 402 via the wheel end trunnion 222 such that a clearance is maintained around the wheel mount end 412 of the wheel arm 402 to provide a space for the wheel mount end 412 of the wheel arm 402 to move through. That is to say, a clearance is maintained between the wheel mount end 412 of the wheel arm 402 and the wheel mounting member 416 and/or wheel 404 to provide a space for the wheel mount end 412 of the wheel arm 402 to move through. The wheel end trunnion 222 may be centred on, and pivotable about, the wheel mount pivoting axis 432.

The chassis mount pivoting axis 230 may be parallel to the wheel mount pivoting axis 432. The chassis mount pivoting axis 230 may be aligned with (e.g. parallel to) the z-axis. The wheel mount pivoting axis 432 may be aligned with (e.g. parallel to) the z-axis.

The chassis mount end 410 of the wheel arm 402 may be rotatably mounted relative to the chassis 200 such that the wheel arm 402 is rotatable about a chassis suspension axis 450 which extends at right angles to the chassis mount pivoting axis 230.

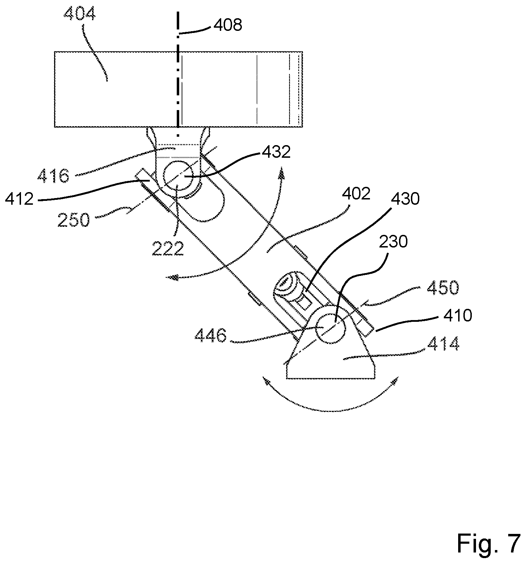

The chassis mount end 410 of the wheel arm 402 may be rotatably mounted to the chassis end trunnion 446 such that the wheel arm 402 may rotate about a respective chassis suspension axis 450 which extends at right angles to the chassis mount pivoting axis 230, as indicated in figure 7. That is to say, the wheel arm 402 may be rotatable about a chassis suspension axis 450.

The wheel mount end 412 of the wheel arm 402 may be rotatably mounted relative to the wheel 404 such that the wheel arm 402 may rotate about a wheel suspension axis 250 which extends at right angles to the wheel mount pivoting axis 432.

The wheel mount end 412 of the wheel arm 402 may be rotatably mounted to the wheel end trunnion 222 such that the wheel arm 402 may rotate about a wheel suspension axis 250 which extends at right angles to the wheel mount pivoting axis 432, as indicated in figure 7. That is to say, the wheel arm 402 and/or wheel 404 is rotatable about a wheel suspension axis 250.

The chassis suspension axis 450 and the wheel suspension axis 250 may be parallel to one another. The chassis suspension axis 450 and the wheel suspension axis 250 may be parallel to and/or aligned with an x-y plane defined by the x-axis and y-axis. The chassis suspension axis 450 and the wheel suspension axis 250 may be parallel to and/or aligned with an x-y plane which extends through the x-axis and y-axis.

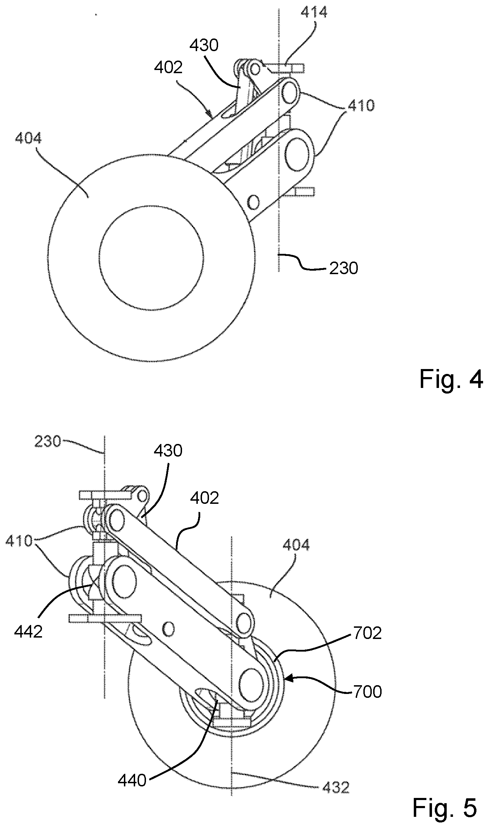

As shown in figures 3 to 5, 7, 8, each wheel arm may be provided with a wheel arm actuator 430, wherein one end of the wheel arm actuator 430 is coupled to the wheel arm 402 and the other end of the wheel arm actuator 430 is coupled to the chassis mounting member 414 and/or the chassis 200. Each wheel arm actuator 430 is operable to control the orientation of its respective wheel arm 402 relative to the chassis 200 about the chassis suspension axis 450.

The wheel arm actuator 430 may be operable to move the wheel arm 402 from a first position relative to the chassis 200 to a second position relative the chassis 200 to thereby alter the height of the chassis 200 from a support surface on which it stands. The wheel arm actuator 430 may also be operable as a spring damper, and may comprise a hydro strut, magneto rheological damper or other appropriate damper solution. That is to say, the wheel arm actuator 430 is operable to pivot the wheel arm 402 relative to the chassis 200 about the chassis suspension axis 450 (that is, an axis which is aligned with and/or parallel to a plane defined by the x-axis and y-axis). The arrangement is configured such that the wheel arm 402 may rotate/pivot relative to the wheel mounting member 416 about the wheel suspension axis 250 (that is, an axis which is aligned with and/or parallel to a plane defined by the x-axis and y-axis).

Each wheel mounting member 416 may be provided with a wheel mounting member actuator 440 to control the orientation of each wheel 402 relative to its respective wheel arm 402. Each drive wheel mounting member actuator 440 may be operable to control the orientation of its respective drive wheel 404 relative to its respective wheel arm 402 about the wheel mount pivoting axis 432.

Each chassis mounting member 414 may be provided with a chassis mounting member actuator 442 to control the orientation of each wheel arm 402 relative to the chassis 200. Each chassis mounting member actuator 442 may be operable to control the orientation of its respective wheel arm 402 relative to the chassis 200 about the chassis mount pivoting axis 230.

Hence each wheel has two degrees of freedom (e.g. turning left/right by pivoting about a wheel mount pivoting axis 432 and rotating around its own central axis 408) and the arm to the chassis has two degrees of freedom (e.g. between forward and aft by pivoting about a chassis mount pivoting axis 230, between up and down by pivoting about a chassis suspension axis 450).

At least one wheel 404 is coupled to a drive system 700 to rotate the, or each, wheel 404 relative to its respective wheel arm 402 to thereby move the vehicle from one location to another. Each drive wheel 404 may be coupled to a drive system 700 operable to drive the drive wheel 404. For example, the drive system 700 may comprise a drive wheel actuator 702 (e.g. a motor) provided as part of the structure of the wheel 404.

That is to say, the wheel drive system 700 may comprises an actuator 702 coupled to the or each wheel 404, wherein each wheel drive actuator 702 is operable independently of each other wheel drive actuator 702.

The vehicle 10 may further comprise a control system 600 operable to control the wheel arm actuators 430 to roll the chassis 200 about the x-axis, pitch the chassis 200 about the y-axis and/or yaw the chassis 200 about the z-axis to orientate (e.g. angle) the chassis 200. For example, the control system 600 is operable to control the suspension 400 position the barrel 300 relative to a target.

Additionally or alternatively the control system 600 may be operable to control the wheel mounting member actuators 440 to pivot each wheel 404 about the wheel mount pivoting axis 432, and each wheel mounting member actuator 440 is operable (e.g. controllable) independently of the other wheel mounting member actuators 440.

Additionally or alternatively the control system 600 may be operable to control the chassis mounting member actuator 442 to pivot each wheel arm 402 about the chassis mount pivoting axis 230, and each chassis mounting member actuator 442 is operable (e.g. controllable) independently of the other chassis mounting member actuators 442.

In examples where present (e.g. with reference to figures 16, 17) a gun barrel 300 may be coupled to a gun barrel actuator 340 operable to pivot the gun barrel 300 about the pivot axis 310, the control system 600 being operable to control the gun barrel actuator 340 to pivot the gun barrel 300 about the pivot axis 310.

Each actuator (i.e. each of the wheel arm actuators 430, wheel mounting member actuators 440, chassis mounting member actuators 442 and (in examples where present) the gun barrel actuator 340) may be operable (e.g. controllable) independently of each other actuator.

Hence the vehicle according to the present disclosure is equipped with one or more wheel arms and wheels, which are controlled in such a way as to provide motion to the chassis not primarily by driven rotation of the wheels, or (in some examples) with no rotation of the wheels. The vehicle of the present disclosure may provide motion by lifting, positioning, lowering, loading, unloading, dragging or driving of the wheel arms. Where necessary, the chassis itself may be lowered to and lifted from the ground as required as part of the sequence. The chassis may also be dragged along the ground or float/rest on soft terrain.

In all examples in which a vehicle of the present disclosure is provided with the chassis suspension system 400, the operability of the chassis suspension system 400 allows for the vehicle to position and orientate itself ready for operation (for example to position weapon system and/or deliver and/or receive ammunition subcomponents.)

The control system 600 may be operable to receive a command to achieve a first objective. The first objective may be an overall aim of the vehicle, for example a high level command. That is to say, the first objective may not include detail on the steps the vehicle should take to achieve the first objective, merely what the mission step may be.

The first objective may be to point the vehicle in a particular direction. For example, in a scenario in which the vehicle is carrying a tool, the first objective may be to approach a target object and conduct an operation using a tool. In a scenario in which the vehicle is carrying a weapon including a gun barrel, the first objective may be to point the barrel towards a target.

The first objective may be to park the vehicle within a receiving structure (for example a container 900).

The first objective may be for the vehicle to perform a step climb manoeuvre.

The first objective may be for the vehicle to cross a gap 906.

The first objective may be for the vehicle to perform a "limp home" manoeuvre.

The control system is operable to determine at least one step required towards the achievement of the first objective. The control system is operable to determine a series of steps required to achieve the first objective. That is to say the vehicle is operable to determine a strategy designed to achieve the first objective.

The control system may be operable to determine the and/or each step required to achieve the first objective in dependence of information gathered from at least one sensor, for example a distance sensor (e.g. to provide information on the distance to a target object), at least one orientation sensor (e.g. to provide information on the orientation of the chassis relative to the target object), at least one imaging sensor (for example a camera and/or other imaging device to provide information about the size and shape of the target object), at least one positioning sensor (for example a global positioning system device to provide information about where the vehicle and/or object is), and/or at least one compass (for example to provide information on the orientation and/or direction of travel of the vehicle). In some examples, there may be provided a sensor (or sensor unit) which is configured/operable to provide/generate one or more of the information types set out above.

The control system 600 may be operable to determine a first chassis suspension system configuration required to achieve the first objective. The first chassis suspension system configuration may be defined by a relative orientation of each of the wheel arms 402 relative to the chassis 200 and a relative orientation of each drive wheel mounting member 416 relative to its respective wheel arm 402.

The control system 600 may be operable to operate one or more of the wheel arm actuators 430, drive wheel mounting member actuators 440 and/or chassis mounting member actuators 442 to achieve the first chassis suspension system configuration.

The control system 600 may be operable to determine a first sequence of chassis suspension system configurations required to achieve the first objective. Each chassis suspension system configuration may be defined by a relative orientation of each of the wheel arms 402 relative to the chassis 200 and a relative orientation of each drive wheel mounting member 416 relative to its respective wheel arm 402.

The control system 600 may be operable to operate one or more of the wheel arm actuators 430, drive wheel mounting member actuators 440 and/or chassis mounting member actuators 442 to perform the first sequence of chassis suspension system configurations.

The control system 600 may be operable to control the path taken by the respective wheel arm 402 relative to the chassis 200 during a motion of the wheel arm 402 between consecutive chassis suspension system configurations.

The control system 600 may be operable to control the trajectory of the respective wheel arm 402 relative to the chassis 200 during a motion of the wheel arm 402 between consecutive chassis suspension system configurations.

The control system 600 may be operable to control the change in orientation of the respective wheel arm 402 relative to the chassis 200 during a motion of the wheel arm 402 between consecutive chassis suspension system configurations.

The control system 600 may be operable to control the relative positioning of the drive wheel mounting member 416 relative to its respective wheel arm 402 during the motion of the respective wheel arm 402.

The control system 600 may be operable to determine a **number n** of chassis displacement motions required to achieve the first objective. The **number n** may have a value of at least one, and the or each chassis displacement motion may be defined by a relative movement of the chassis 200 relative to the substrate 500. Hence a chassis displacement motion may be one in which the chassis 200 pivots relative to the x-axis, y-axis and/or z-axis, or moves in a direction along the x-axis, y-axis and/or z-axis.

Each drive wheel 404 may be coupled to a drive wheel actuator 702 configured to drive the drive wheel 404 about a rotational axis 408. The control system 600 may be operable to operate one or more of the wheel arm actuators 430, drive wheel mounting member actuators 440, chassis mounting member actuators 442 and/or drive wheel actuator 702 to perform a chassis displacement motion while the vehicle is in one or more of the chassis suspension system configurations.

Each of the wheel arm actuators 430, drive wheel mounting member actuators 440, chassis mounting member actuators 442 and drive wheel drive system actuators 702 may be operable independently of each other.

The control system 600 may be operable to control the transition between each consecutive chassis suspension system configuration while one or more of the drive wheel drive system actuators 702 are in operation. That is to say, one or more of the drive wheel drive system actuators 702 may be operated during a transition of the chassis suspension system from one chassis suspension system configuration to a different chassis suspension system configuration. For example, the vehicle may be operable to move along a support medium, its wheels being driven by one or more drive wheel drive system actuators 702, at the same time as a transition of the chassis suspension system from one chassis suspension system configuration to a different chassis suspension system configuration.

The control system may be operable to keep the chassis level. The control system may be operable to keep the parallel to the substrate 500. The control system may be operable to angle the chassis relative to the substrate 500.

The control system 600 may be operable to operate one or more of the wheel arm actuators 430, drive wheel mounting member actuators 440, chassis mounting member actuators 442 and/or drive wheel actuator 702 to achieve a chassis displacement motion during the motion of the respective wheel arm 402.

The control system 600 may be operable to operate one or more of the wheel arm actuators 430, drive wheel mounting member actuators 440, chassis mounting member actuators 442 and/or drive wheel actuator 702 to achieve a chassis displacement motion in response to the motion of the respective wheel arm 402.

The control system 600 may be operable to control the transition between each consecutive chassis suspension system configuration to include rolling the chassis 200 about the roll axis 210, pitching the chassis 200 about the pitch axis 212 and/or yawing the chassis 200 about the yaw axis 214.

The control system may be operable to determine whether the first objective has been achieved.

The control system may be operable to record the result of the determination whether the first objective has been achieved.

The control system may be operable to transmit a signal indicating the result of the determination whether the first objective has been achieved.

The first objective may be to point the vehicle in a particular direction. For example, in a scenario in which the vehicle is carrying a tool, the first objective may be to approach a target object and conduct an operation using a tool. In a scenario in which the vehicle is carrying a weapon including a gun barrel, the first objective may be to point the barrel towards a target.

The operation of the vehicle will now be described with respect to the following examples shown in the figures.

In each of the examples, the method of operating a vehicle may comprise moving (e.g. translating, displacing) the chassis 200 from one location to another prior to achieving (i.e. moving into) a determined chassis suspension system configuration. Moving (e.g. translating, displacing) the chassis/vehicle may comprise operating the drive system 700 to drive the drive wheel(s) 404 relative to (for example, along, over and/or through) the support medium 500.

For example, the control system 600 may be operable to control the drive system 700 to drive the or each wheel 404 to move the vehicle 10 from one location to another (for example to get closer to a target and/or to achieve a desired position relative to a target destination).

Hence in a vehicle according to the present disclosure, approximate positioning relative to a target location/object (e.g. another vehicle, delivery location or firing position) may be achieved by positioning the vehicle by driving the wheels 404. This could be achieved by driving forwards and/or backwards.

### Example 1 - Pointing

The first objective may be to position the vehicle 100 at an orientation relative to a target object.

For example, the vehicle control system 600 may receive a command to achieve a first objective. By way of a non limiting example, the first objective may be to point the vehicle and/or orientate the chassis 200 in a particular direction. The command may include the definition of an external pointing vector which defines the direction that the vehicle is commanded to point and/or orientate the chassis 200.

In response to receiving the command, the vehicle control system 600 may determine a first chassis suspension system configuration required to achieve the first objective.

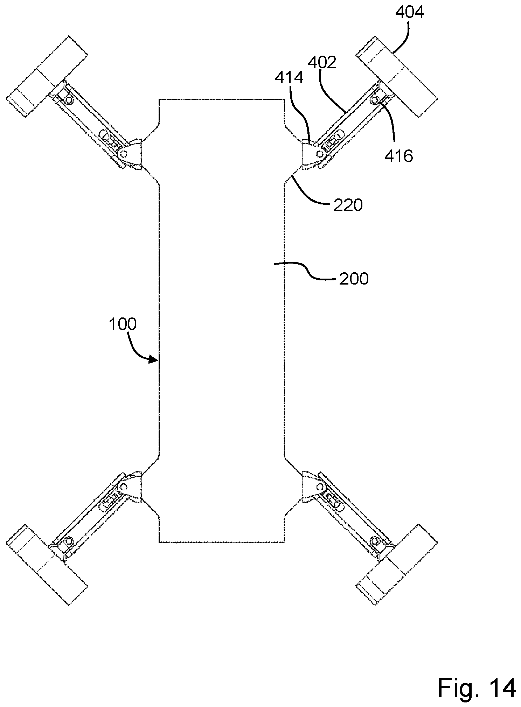

For example, the first chassis suspension system configuration determined by the control system may comprise one of the following steps:
Step 1-1: move the wheels and wheel arms from a normal drive arrangement into a diamond steer configuration (figure 14) (so that the vehicle may be rotated by driving the wheels, e.g. to turn the vehicle on the spot) to approximate vector alignment;
Step 1-2: align the wheels with the with chassis (e.g. bring the wheels to be parallel to the side of the chassis they extend from), or align wheels with the required pointing vector (figure 15); or
Step 1-3: articulate wheel arms and wheels relative to one another to achieve the exact pointing angle (figure 15).

The vehicle control system 600 is then operate one or more of the wheel arm actuators 430, drive wheel mounting member actuators 440, chassis mounting member actuators 442 and/or drive wheel actuators 702 to achieve a first chassis suspension system configuration defined in any one of steps 1-1 to 1-3.

After the conclusion of the step, the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

### Example 2 - Pointing

The first objective may be to position the vehicle 100 at an orientation relative to a target object.

For example, the vehicle control system 600 may receive a command to achieve a first objective. By way of a non limiting example, the first objective may be to point the vehicle and/or orientate the chassis 200 in a particular direction. The command may include the definition of an external pointing vector which defines the direction that the vehicle is commanded to point and/or orientate the chassis 200.

In response to receiving the command, the vehicle control system 600 is operable to determine a first sequence of chassis suspension system configurations required to achieve the first objective.

For example, the first sequence of chassis suspension system configurations determined by the control system may comprise the following steps:
Step 2-1: move the wheels and wheel arms into a diamond steer configuration (figure 14) (so that the vehicle may be rotated by driving/rotating the wheels (e.g. to turn the vehicle on the spot) to approximate vector alignment;
Step 2-2: align the wheels with the with chassis (e.g. bring the wheels to be parallel to the side of the chassis they extend from), or align wheels with required pointing vector (figure 15);
Step 2-3: articulate wheel arms and wheels relative to one another to achieve exact pointing angle (figure 15).

The vehicle control system 600 may then operate one or more of the wheel arm actuators 430, drive wheel mounting member actuators 440, chassis mounting member actuators 442 and/or drive wheel actuators 702 to perform the first sequence of chassis suspension system configurations as set out in steps 2-1 to 2-3 and perform the wheel drive operation described in step 2-1).

After the conclusion to the steps, the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

Hence, in this example, the vehicle/chassis may be approximately located/orientated by rotating the vehicle on the spot (e.g. about the z-axis in step B2).

To achieve coarse pointing (e.g. step 2-1), "diamond steer" may be used in which the wheels are turned so that their axle points are towards the centre of the vehicle so describing a circle around the vehicle as it rotates. The wheels may be driven to rotate the vehicle to approximately the desired orientation. The wheel may then be turned to be parallel to the chassis.

Fine positioning/traverse may be achieved by manipulating the wheel arms and suspension once the vehicle is parked (e.g. steps 2-2, 2-3). For example, final positional adjustment may be achieved by operating the suspension system 400 to roll the chassis about the x-axis, pitching the chassis about the y-axis or yawing the chasing about the z-axis.

The control system 600 may control the transition between each consecutive chassis suspension system configuration to include rolling the chassis 200 about the roll axis 210, pitching the chassis 200 about the pitch axis 212 and/or yawing the chassis 200 about the yaw axis 214.

As described above, the wheel arms are constructed so that the wheels can be moved towards/away from the vehicle chassis independently on all sides so the chassis can be rotated relative to the wheel position.

For example, to achieve fine pointing the angles of the arms to the chassis and wheels may be adjusted such that the vehicle chassis rotates within the track of the wheels. The wheels are free to roll forward and back but do not move sideways.

That is to say, chassis, wheel arms and wheels may be constructed and mounted such that each wheel arm and wheel assembly of the vehicle may be operable move independently of at least one other of the wheel arm and wheel assembly of the vehicle. Each wheel arm and wheel assembly of the vehicle may be operable move independently of every other each other wheel arm and wheel assembly of the vehicle.

### Example 3 - Aiming a weapon

In some examples of the vehicles of the present disclosure the vehicle may be provided with a weapon system comprising a gun 300 (as shown in figures 16, 17). The vehicle may form part of a gun targeting system. The vehicle may form part of a gun targeting system for transporting, supporting and targeting a gun.

In an example in which the vehicle comprises a gun barrel, the gun barrel 300 may have a barrel axis 302. The first objective may be to position the barrel 300 towards an orientation to target an object.

For example, the vehicle control system 600 may receive a command to achieve a first objective, where the first objective is to point the vehicle and/or orientate the chassis 200 in a particular direction to position the barrel 300 towards an orientation to target an object. The command may include the definition of an external pointing vector which defines the direction that the vehicle is commanded to point and/or orientate the chassis 200.

In response to receiving the command, the vehicle control system 600 is operable to determine a first sequence of chassis suspension system configurations required to achieve the first objective.

For example, the first sequence of chassis suspension system configurations determined by the control system may comprise the following steps:
Step 3-1: move the wheels and wheel arms into a diamond steer configuration (figure 14) (so that the vehicle may be rotated by driving the wheels (e.g. to turn the vehicle on the spot) to approximate vector alignment;
Step 3-2: align the wheels with the with chassis (e.g. bring the wheels to be parallel to the side of the chassis they extend from -figure 15), or align wheels with required pointing vector;
Step 3-3: articulate wheel arms and wheels relative to one another to achieve exact pointing angle (figure 15).

The vehicle control system 600 may then operate one or more of the wheel arm actuators 430, drive wheel mounting member actuators 440, chassis mounting member actuators 442 and/or drive wheel actuators 702 to perform the first sequence of chassis suspension system configurations as set out in steps 3-1 to 3-3 and perform the wheel drive operation described in step 3-1).

The control system 600 may control the transition between each consecutive chassis suspension system configuration to include rolling the chassis 200 about the roll axis 210, pitching the chassis 200 about the pitch axis 212 and/or yawing the chassis 200 about the yaw axis 214.

After the conclusion to the steps, the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

Hence, in examples in which a weapon system is provided, the vehicle may be configured as a gun targeting system by virtue of the operability of the chassis suspension system 400 which supports the chassis 200. Figures 15, 16 show an example of a vehicle according to the present disclosure comprising a gun, where the gun is attached to the vehicle by a mount. The vehicle and configuration of the gun mount provide a gun targeting system. Figure 15 illustrates a plan view and Figure 16 shows a side view.

In examples where present (and as illustrated in figures 15, 16), the barrel 300 may be mounted to the chassis 200 by a pivot mount 304, the barrel 300 being pivotable relative to the x-axis about a pivot axis 310 aligned with (e.g. parallel to) the y-axis. That is to say, the barrel 300 is pivotable relative to the x-axis about a pivot axis 310 aligned with (e.g. parallel to) the y-axis and mounted such that it is constrained to move in a plane defined by the x-axis and z-axis. Put another way, the barrel 300 may be pivotable relative to the x-axis about a pivot axis 310 aligned with (e.g. parallel to) the y-axis, and the barrel 300 may be mounted to the chassis 200, directly or indirectly, such that it is constrained to move in a plane defined by the x-axis and z-axis. That is to say, while the barrel 300 may be pivotable relative to the x-axis about a pivot axis 310 aligned with (e.g. parallel to) the y-axis, it is non-rotatable about the z-axis. Put another way, the barrel 300 is limited to pivot relative to the x-axis about a pivot axis 310 aligned with (e.g. parallel to) the y-axis, and mounted to the chassis 200 (e.g. directly or indirectly) so that it cannot be swung around the z-axis.

As described above, the suspension system may be configured such that the gun targeting system 10 is operable to position the barrel 300 towards an orientation to target an object by pivoting one or more of the wheel arms 402 relative to the chassis 200 and/or by pivoting one or more wheels 404 relative to its respective wheel arm 402 and/or by rotating one or more wheels 404 relative to its respective wheel arm 402.

Hence the control system 600 may be operable to control the wheel arm actuators 430, wheel mounting member actuators 440, chassis mounting member actuators 442 and (in examples where present) the gun barrel actuator 340 to position the barrel 300 to target an object. For example, in response in response to a receiving a command from a user to target an object and/or in response to receipt of data which identifies and/or locates a target, and/or in response to sensing and/or identifying a target, the control system 600 may control the wheel arm actuators 430, wheel mounting member actuators 440, chassis mounting member actuators 442 and the gun barrel actuator 340 to position the barrel 300 to target an object.

### Example 4 - Stowage (short container e.g. 20ft ISO)

The first objective may be to locate the vehicle 100 inside a container 900, where the container 900 may be any structure (e.g. crate, box, vehicle, storage unit, building which defines a cavity 902 large enough to receive the vehicle 100).

For example, the vehicle control system 600 may receive a command to achieve a first objective. By way of a non limiting example the first objective is to locate the vehicle 100 inside a container 900. Hence the vehicle control system 600 may be configured to receive a command to stow the vehicle 600 in a specifically identified container 900, or any container 900 that the vehicle control system 600 is operable to identify.

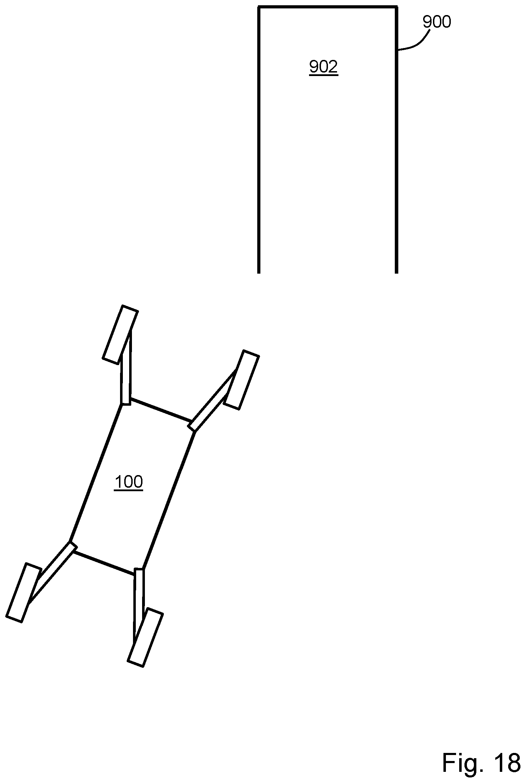

The vehicle control system 600 may be operable to determine the location of the container/structure, and hence may use sensors (e.g. imaging systems), map data and/or positioning system (e.g. GPS) to gather information about the vehicle location and/or the location of the container/structure. The control system may generate a command to instruct the vehicle to approach the container/structure (figure 18).

In response to receiving the command and/or in response to the vehicle being proximate to the container/structure, the vehicle control system 600 is operable to determine a first sequence of chassis suspension system configurations required to achieve the first objective.

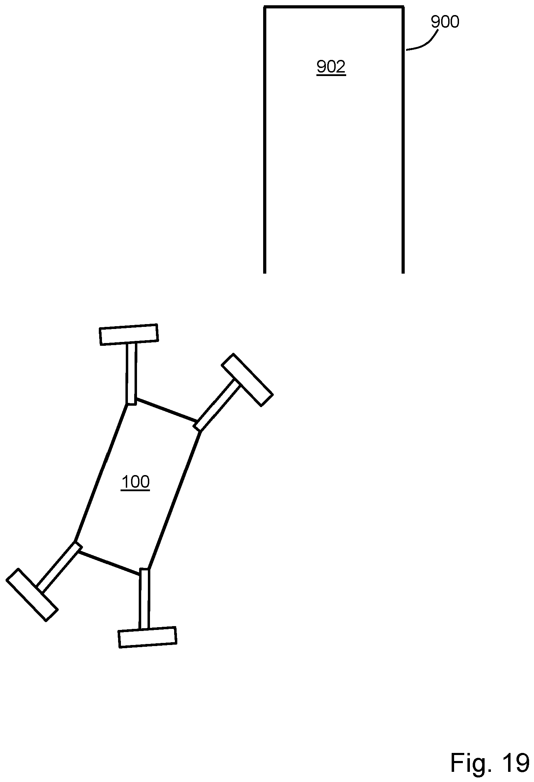

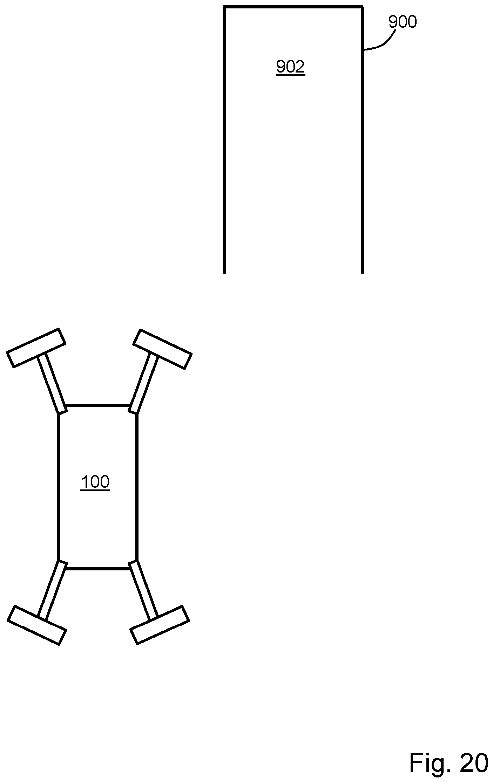

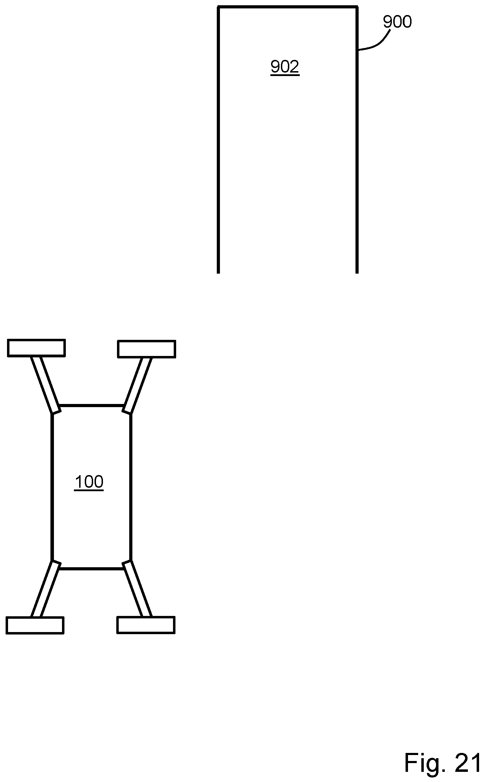

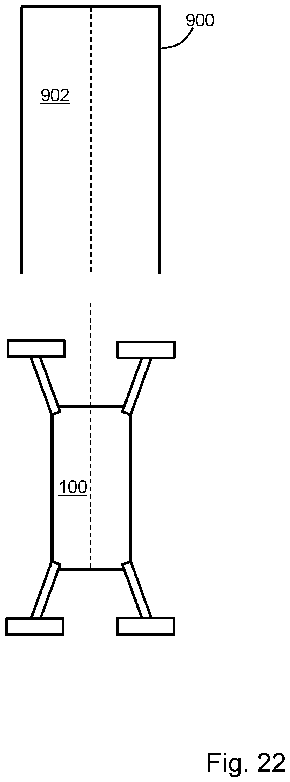

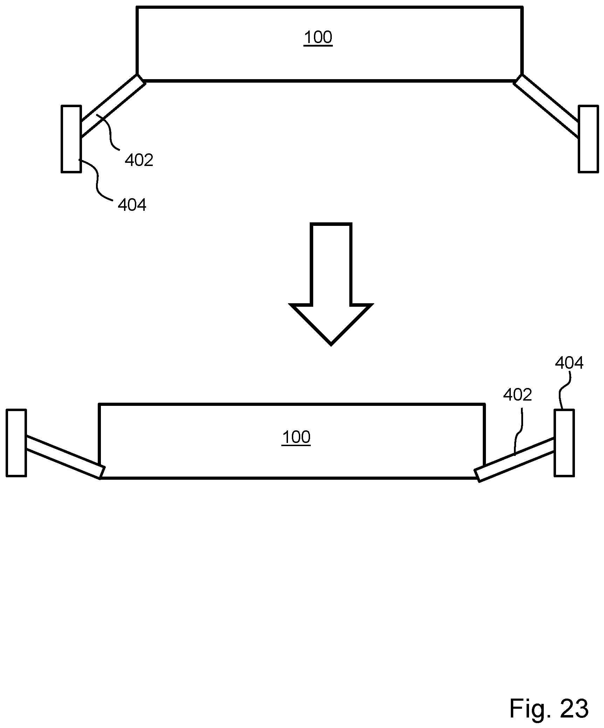

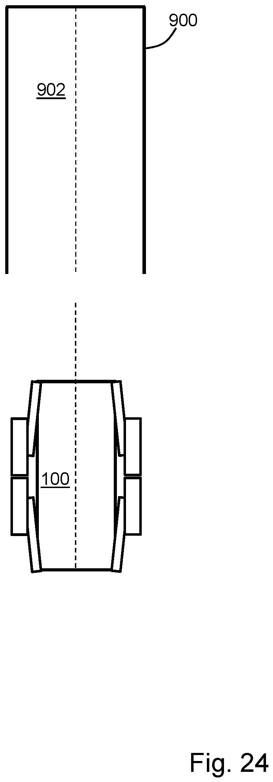

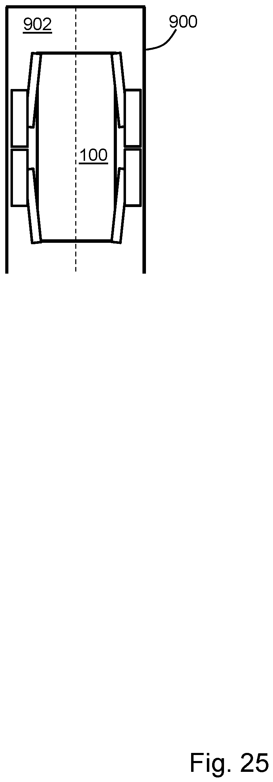

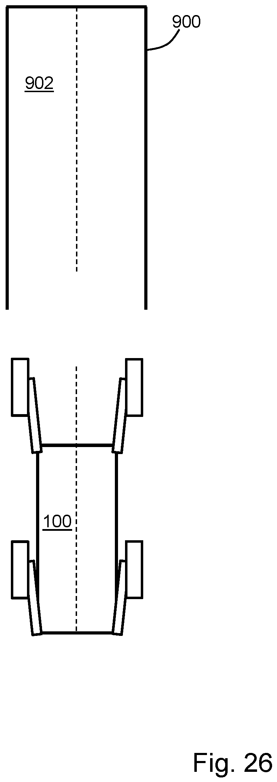

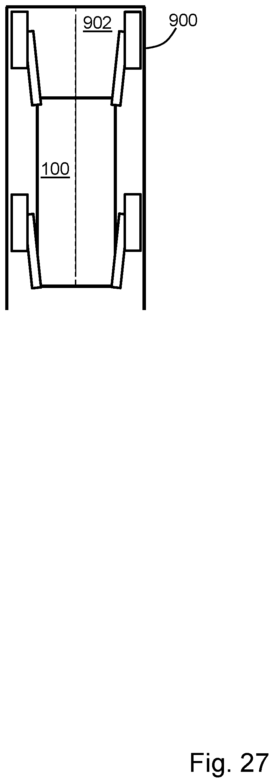

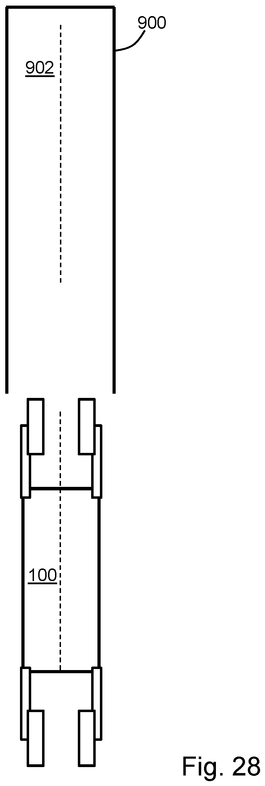

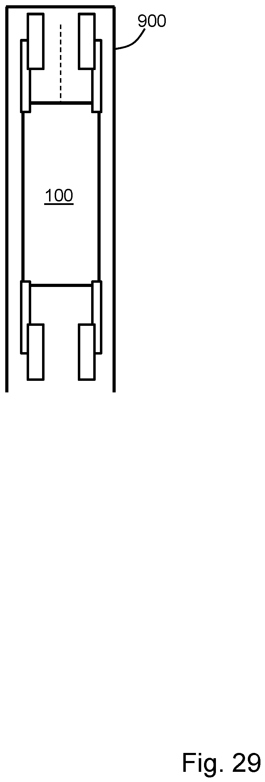

For example, the first sequence of chassis suspension system configurations determined by the control system may comprise the following steps:
Step 4-1: Move into diamond steer configuration (figure 19) (so that the vehicle may, by rotating the drive wheels, be rotated by driving the wheels (e.g. to turn the vehicle on the spot) until the chassis is aligned with the cavity 902 defined by the container 900 (figure 20).
Step 4-2: Move into crab steer configuration (figure 21) (so that the vehicle may, by rotating the drive wheels, sidle until centreline of chassis is aligned with centreline of the opening and the centreline of the cavity 902 defined by the container 900 (figure 22);
Step 4-3: Lower the suspension until chassis is on the substrate and the wheels are spaced apart from the substrate (figure 23);
Step 4-4: Move into stowage configuration (e.g. short configuration - figures 24, 25; medium configuration - figures 26, 27; thin configuration - figures 28, 29);
Step 4-5: Raise chassis back onto wheels (so that the vehicle may, by rotating the drive wheels, drive through the opening in the container 900 into the cavity 902 defined by the container 900;

The vehicle control system 600 is then operable operate one or more of the wheel arm actuators 430, drive wheel mounting member actuators 440, chassis mounting member actuators 442 and/or drive wheel actuators 702 to perform the first sequence of chassis suspension system configurations as set out in steps 4-1 to 4-5 and perform the wheel drive operations described in steps 4-1, 4-2, 4.5).

After the conclusion to the steps, the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

### Example 5 - Step Climb

The first objective may be to climb a step/obstacle 904.

For example, the vehicle control system 600 may receive a command to achieve a first objective. By way of a non limiting example, the first objective may be to climb a step/obstacle 904. Hence the vehicle control system may be configured to receive a command to climb a step/obstacle 904.

The vehicle control system 600 may be operable to determine the location of the step/obstacle 904, and hence may use sensors (e.g. imaging systems), map data and/or positioning system (e.g. GPS) to gather information about the vehicle location and/or the location of the step/obstacle 904. The control system may generate a command to instruct the vehicle to approach the step/obstacle 904.

In response to receiving the command and/or in response to the vehicle being proximate to the step/obstacle 904, the vehicle control system 600 is operable to determine a first sequence of chassis suspension system configurations required to achieve the first objective.

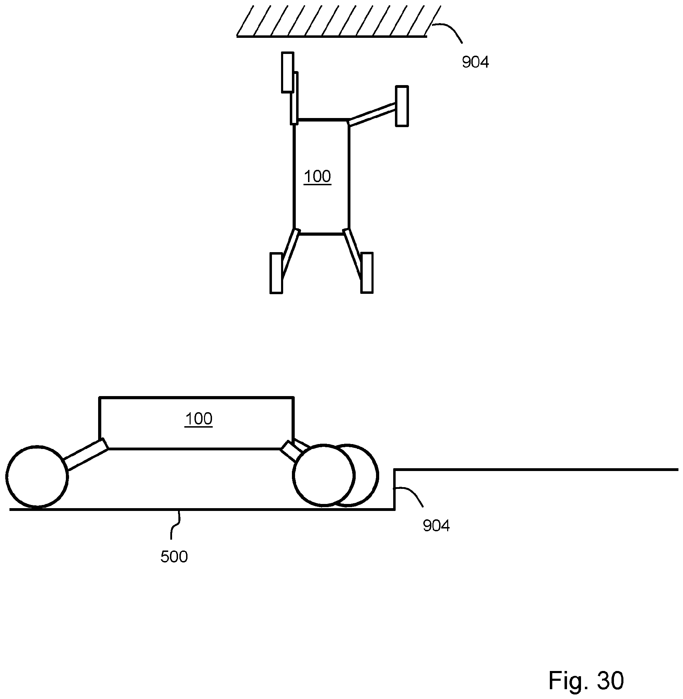

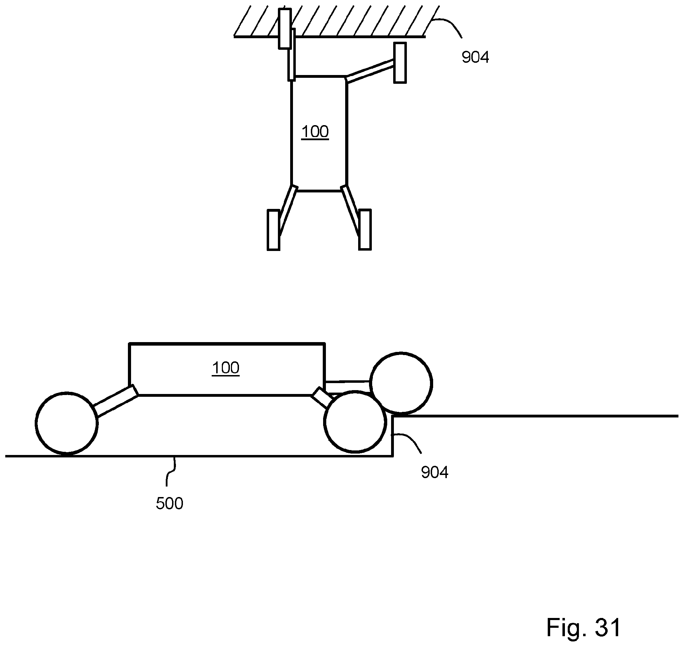

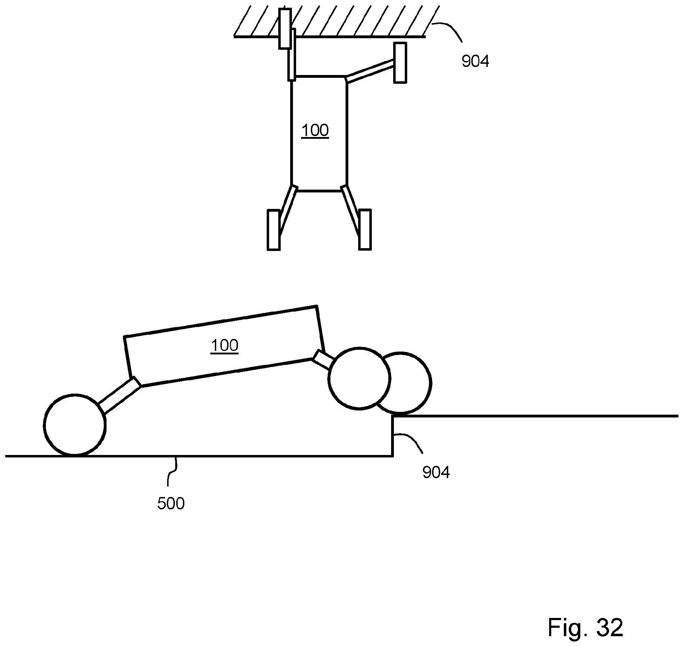

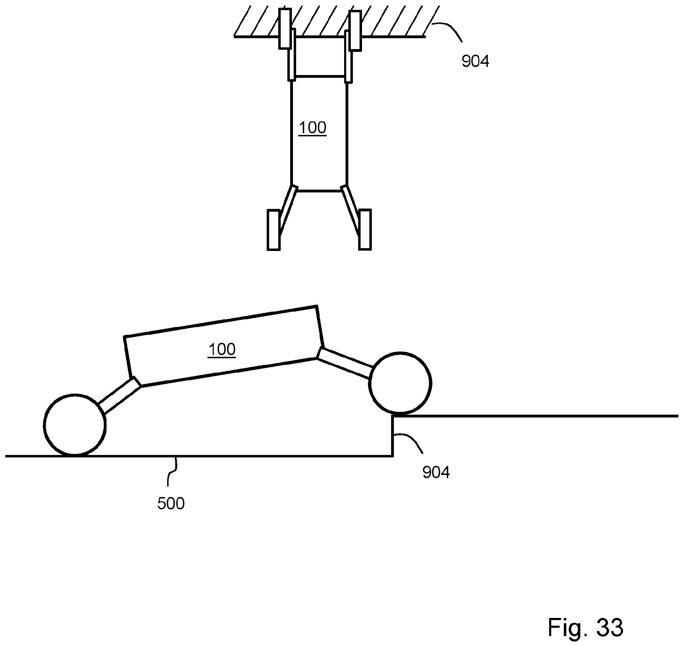

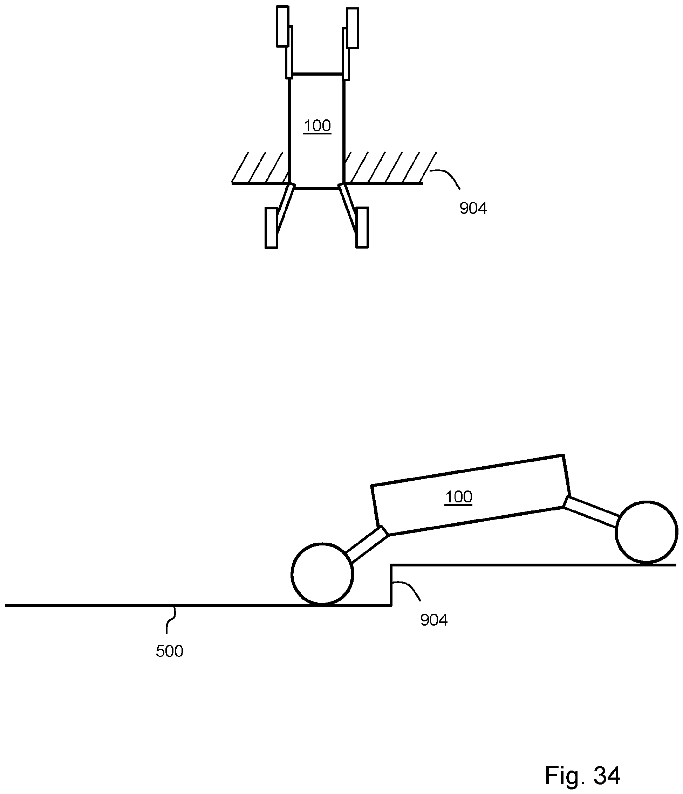

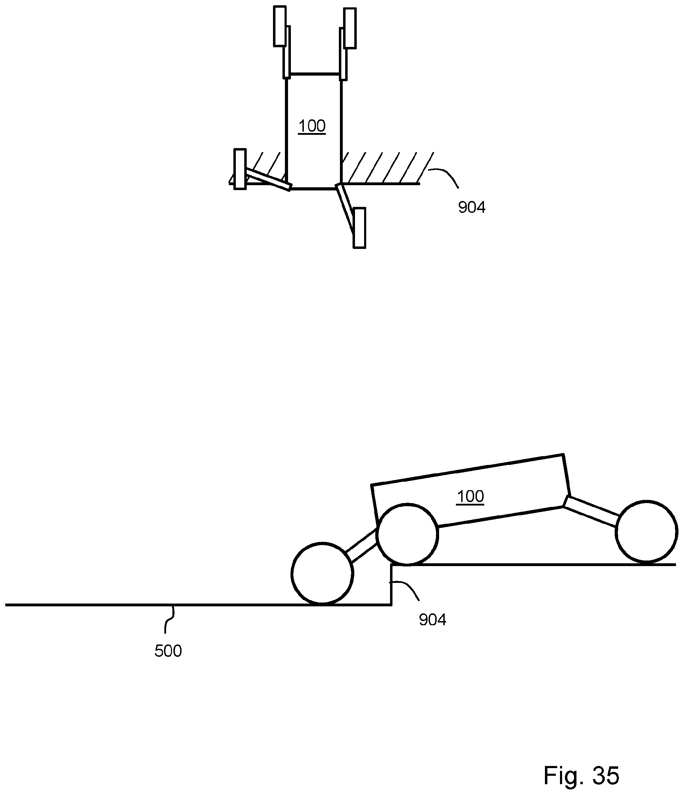

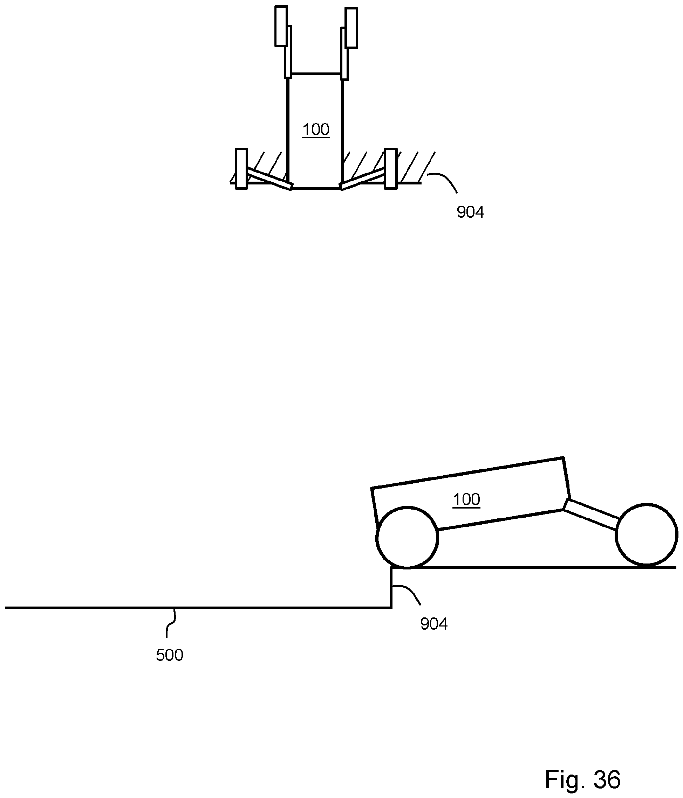

For example, the first sequence of chassis suspension system configurations determined by the control system may comprise the following steps:
Step 5-1: Raise leading arm (figure 30);
Step 5-2: Place leading arm on step (figure 31);
Step 5-3: Lower leading arm/raise chassis front (figure 32);
Step 5-4: Move second arm onto step (figure 33) (so that the vehicle 200 may, by rotating/driving the drive wheels, move forwards, figure 34);
Step 5-6: Swing first rear arm onto step (figure 35);
Step 5-7: Swing second rear arm onto step (figure 36);
Step 5-8: Assume driving configuration (so that the vehicle 200 may, by rotating/driving the drive wheels, drive away).

The vehicle control system 600 is then operable operate one or more of the wheel arm actuators 430, drive wheel mounting member actuators 440, chassis mounting member actuators 442 and/or drive wheel actuators 702 to perform the first sequence of chassis suspension system configurations as set out in steps 5-1 to 5-8 and perform the wheel drive operations described in steps 5-4, 5-8).

After the conclusion to the steps, the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

### Example 6 - Gap Crossing

The first objective may be to cross a gap 906 in the substrate.

For example, the vehicle control system 600 may receive a command to achieve a first objective. By way of a non limiting example, the first objective may be to cross a gap 906 in the substrate. Hence the vehicle control system may be configured to receive a command to cross a gap 906 in the substrate.

The vehicle control system 600 may be operable to determine the location of the gap 906 in the substrate, and hence may use sensors (e.g. imaging systems), map data and/or positioning system (e.g. GPS) to gather information about the location of the gap 906 in the substrate. The control system may generate a command to instruct the vehicle to approach the gap 906 in the substrate.

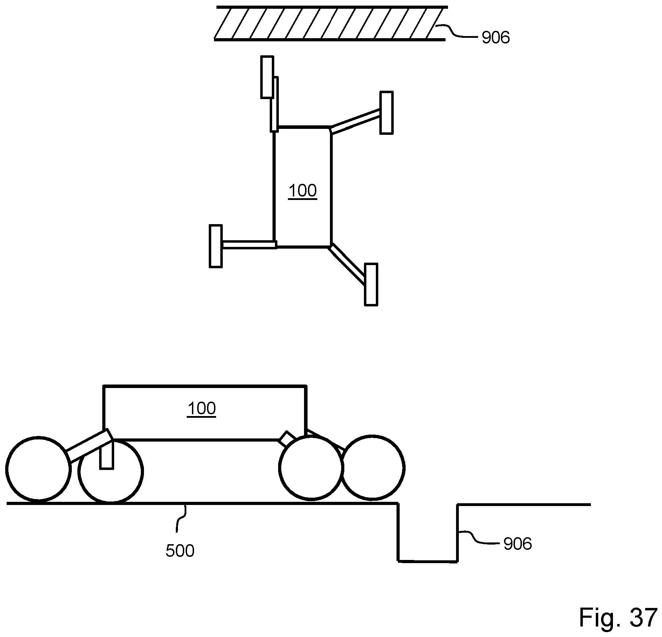

In response to receiving the command and/or in response to the vehicle being proximate to the gap 906 in the substrate (figure 37), the vehicle control system 600 is operable to determine a first sequence of chassis suspension system configurations required to achieve the first objective.

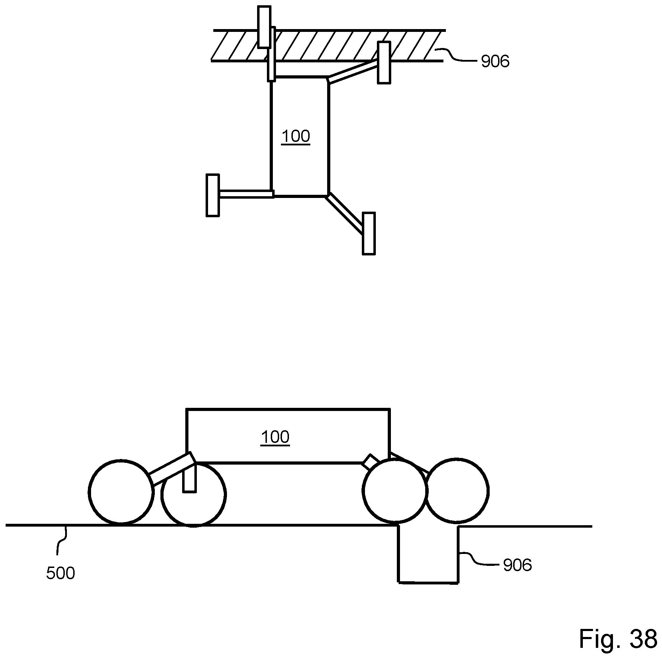

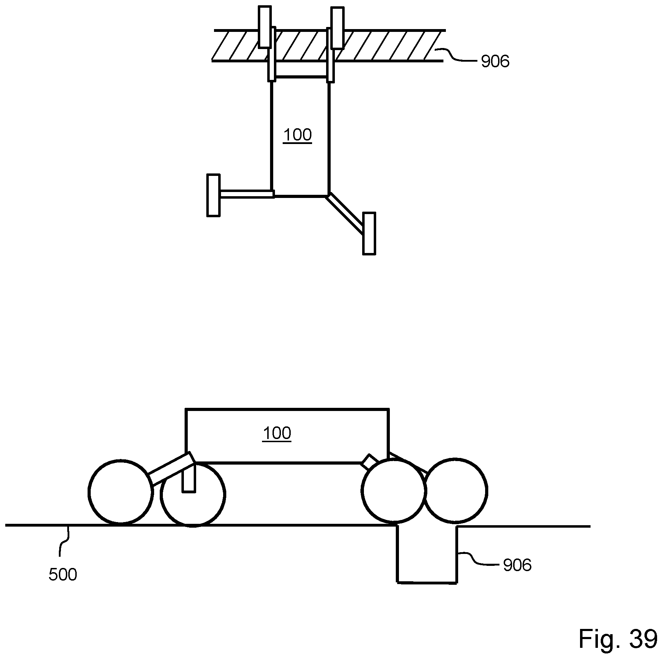

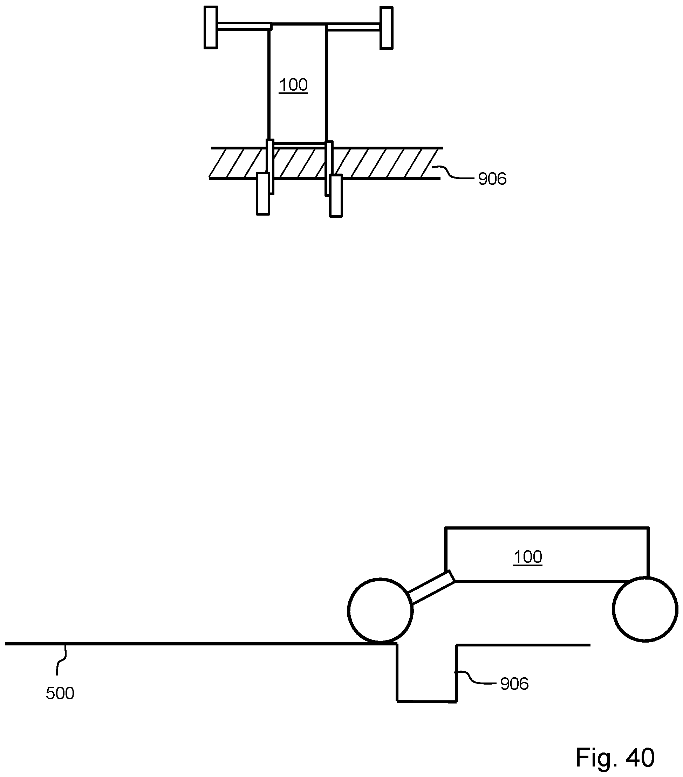

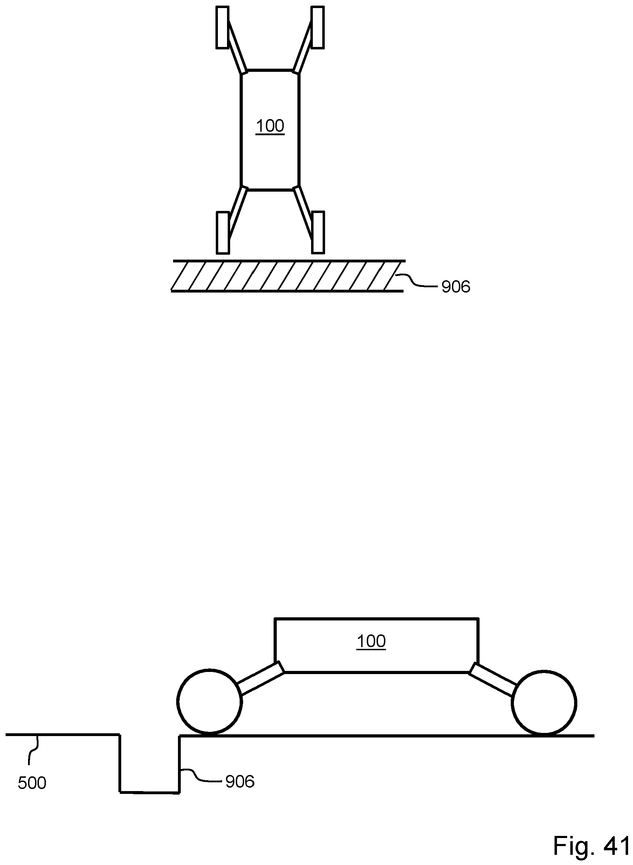

By way of a first non-limiting example of example 6, the first sequence of chassis suspension system configurations determined by the control system may comprise the following steps:
Step 6A-1: Maintain a first wheel arm and wheel in a fixed position (figure 38) (so that the vehicle 200 may, by rotating/driving the drive wheels, move forwards until the first wheel arm and wheel is across the gap 906);
Step 6A-2: Lift a second wheel arm and wheel forward arm across the gap (figure 39) (so that the vehicle 200 may, by rotating/driving the drive wheels, move forwards until the second wheel arm and wheel is across the gap 906);
Step 6A-3: extend a third wheel arm and wheel and a fourth wheel arm and toward the rear of the vehicle (figure 40) (so that the vehicle 200 may, by rotating/driving the drive wheels, move forwards until the third wheel arm and wheel and fourth wheel arm and wheel are across the gap, and then drive away - figure 41).

The vehicle control system 600 is then operable operate one or more of the wheel arm actuators 430, drive wheel mounting member actuators 440, chassis mounting member actuators 442 and/or drive wheel actuators 702 to perform the first sequence of chassis suspension system configurations as set out in steps 6A-1 to 6A-3 and perform the wheel drive operations described in steps 6A-1, 6A-3).

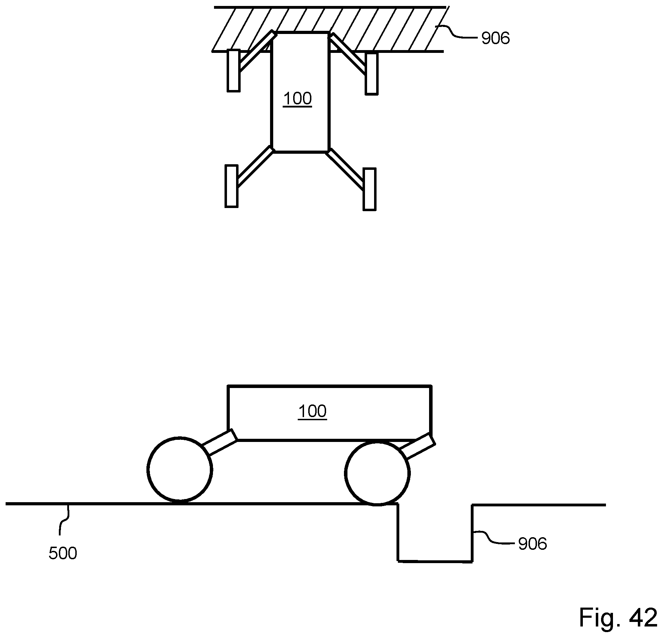

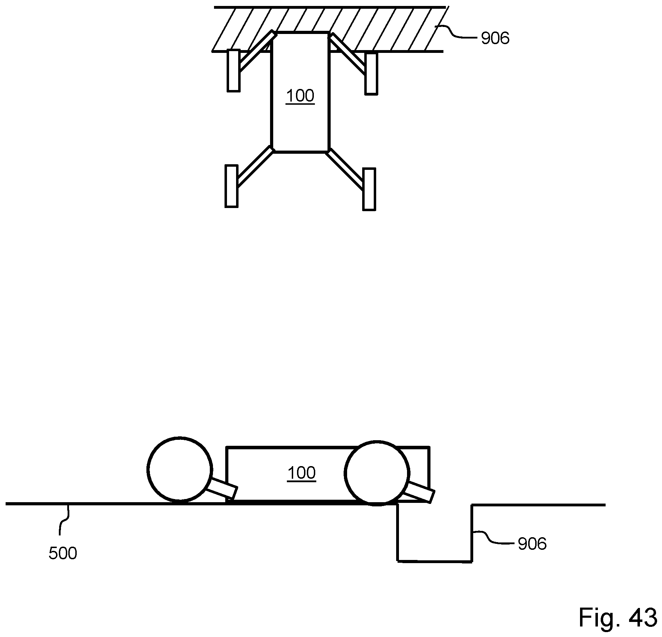

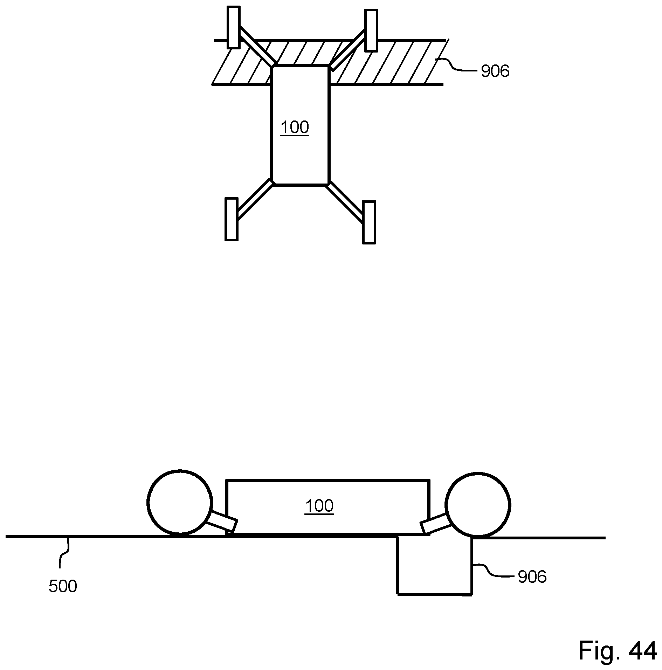

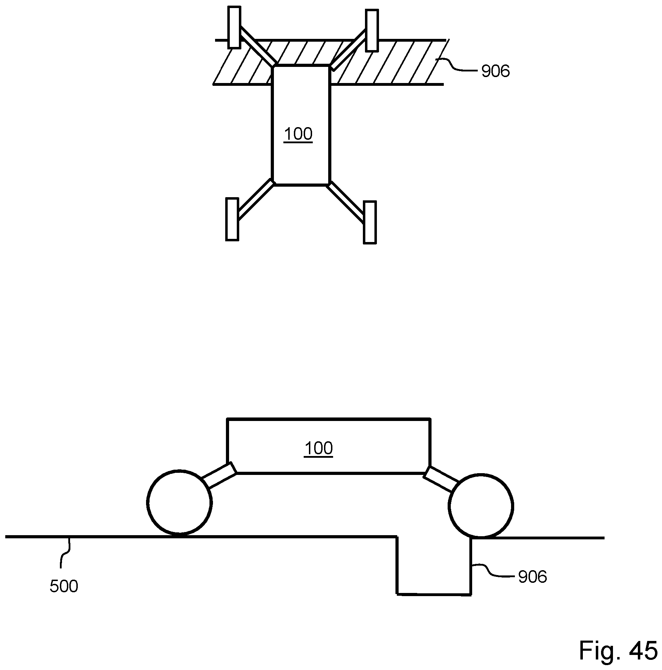

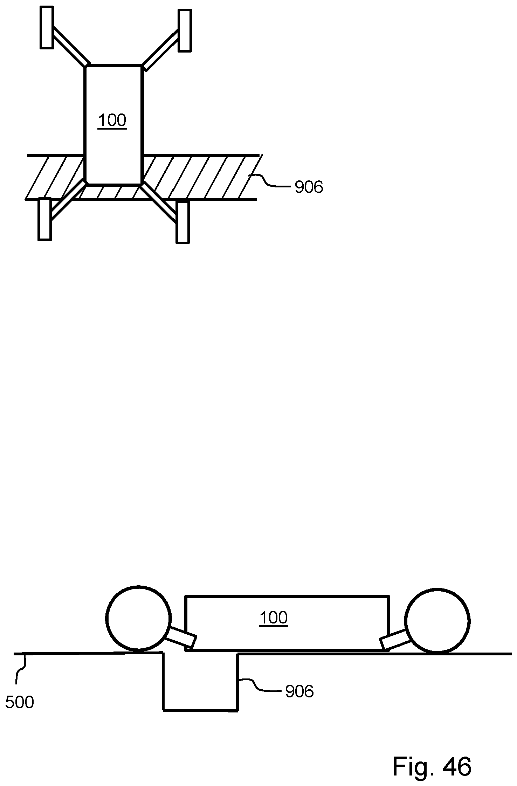

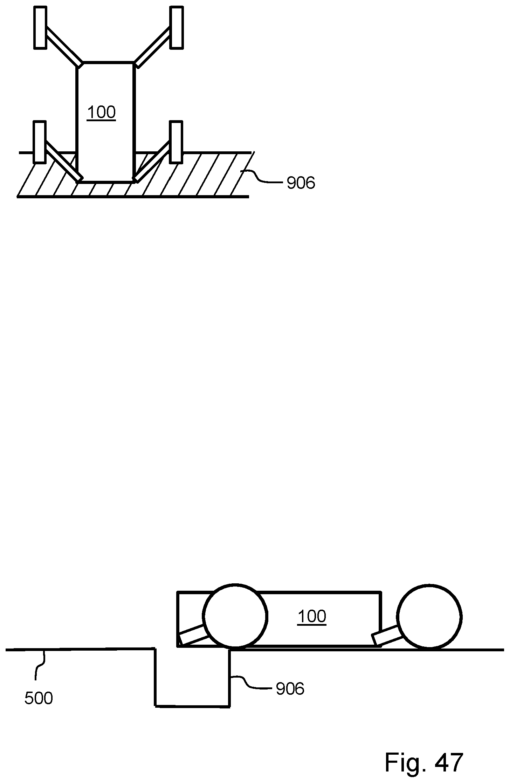

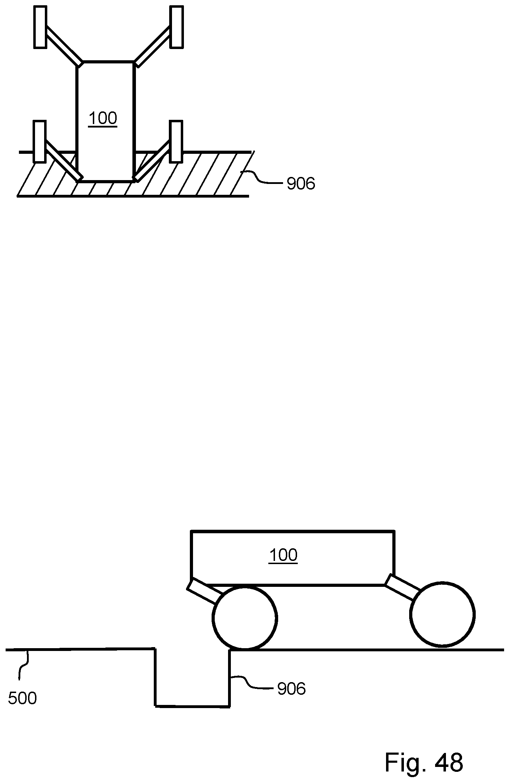

By way of a second non-limiting example of example 6, the first sequence of chassis suspension system configurations determined by the control system may comprise the following steps:
Step 6B-1: Place chassis on ground (figures 42, 43);
Step 6B-2: Lift both the first wheel arm and wheel and second wheel and wheel across the gap 906 (figure 44);
Step 6B-3: Lift chassis with the first wheel arm and wheel and second wheel and wheel on a different side of the gap 906 to the third wheel arm and wheel and fourth wheel and wheel (figure 45);
Step 6B-4: Move forwards (so that the vehicle 200 may, by rotating/driving the drive wheels, move forwards until the third wheel arm and wheel and fourth wheel and wheel are on the edge of the gap 906 - figure 46);
Step 6B-5: Place chassis on ground (figure 46);
Step 6B-6: Lift both rear arms across gap 906 so that the first wheel arm and wheel and second wheel and wheel are on the same side of the gap 906 to the third wheel arm and wheel and fourth wheel and wheel (figure 47);
Step 6B-7: Lift chassis (figure 48);
Step 6B-8: Assume drive configuration (so that the vehicle 200 may, by rotating/driving the drive wheels, drive away).

The vehicle control system 600 is then operable operate one or more of the wheel arm actuators 430, drive wheel mounting member actuators 440, chassis mounting member actuators 442 and/or drive wheel actuators 702 to perform the first sequence of chassis suspension system configurations as set out in steps 6B-1 to 6B-8 and perform the wheel drive operations described in steps 6B-4, 6B-8).

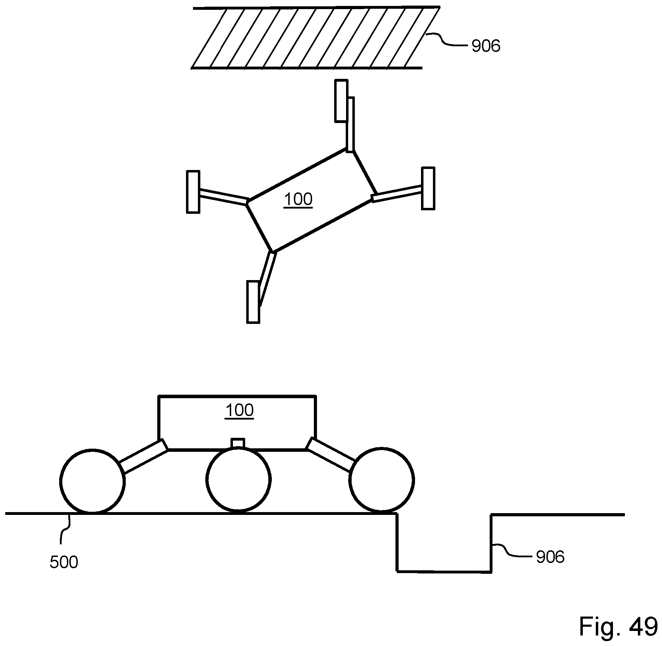

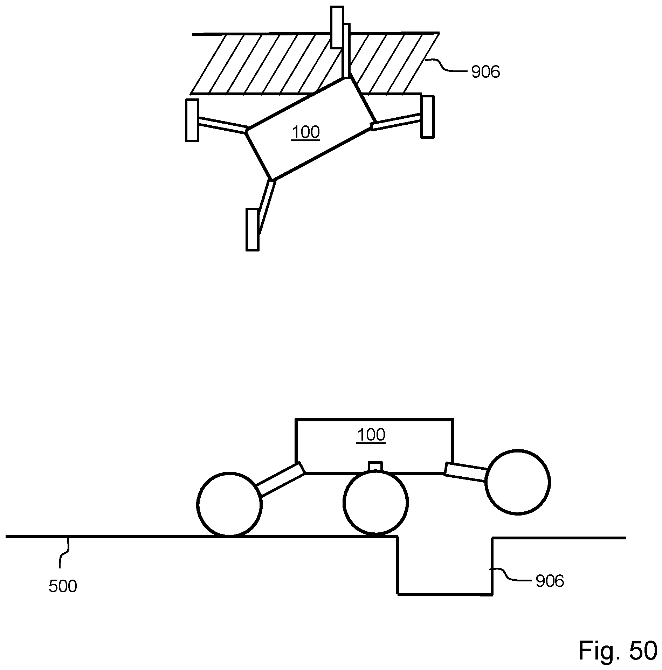

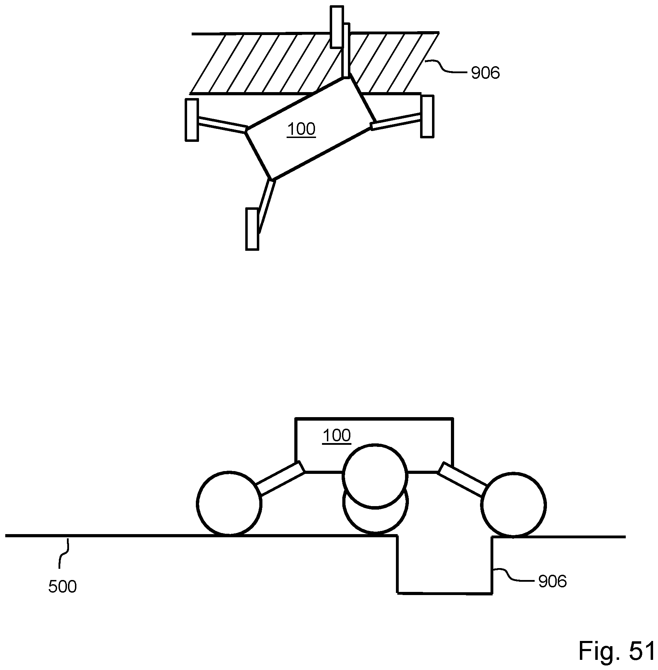

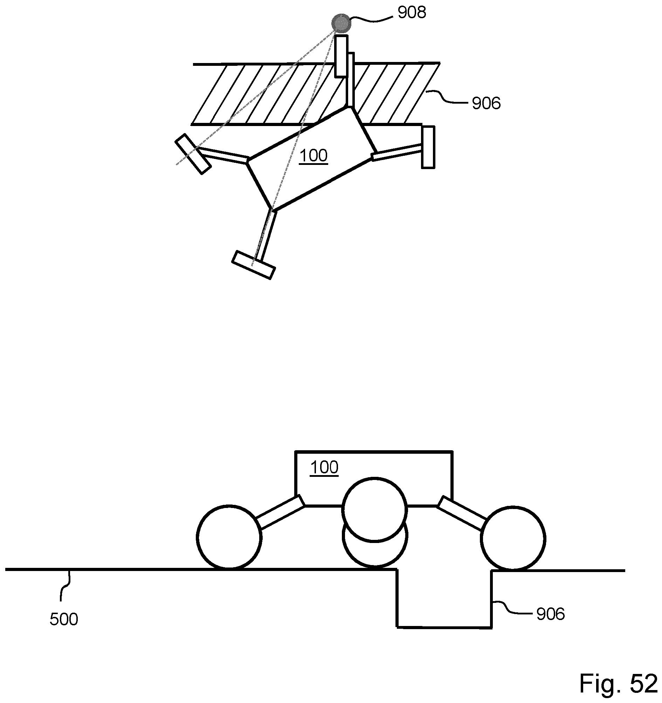

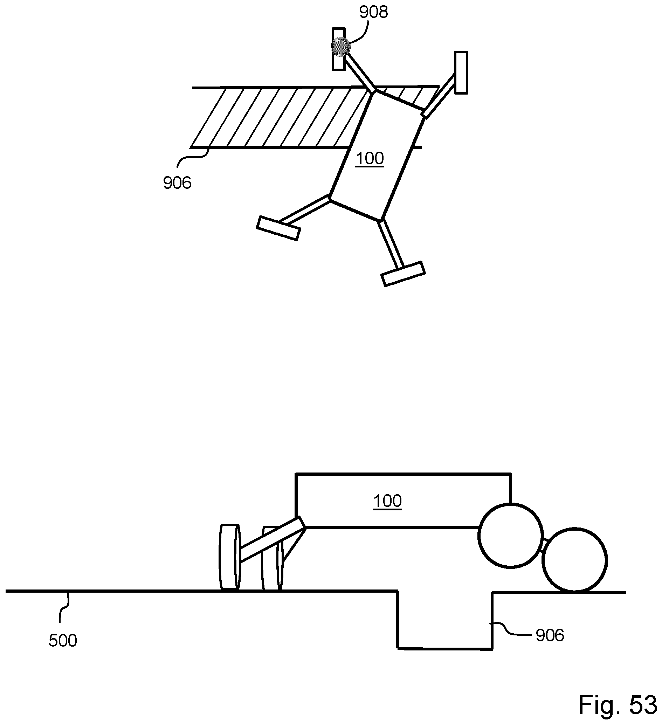

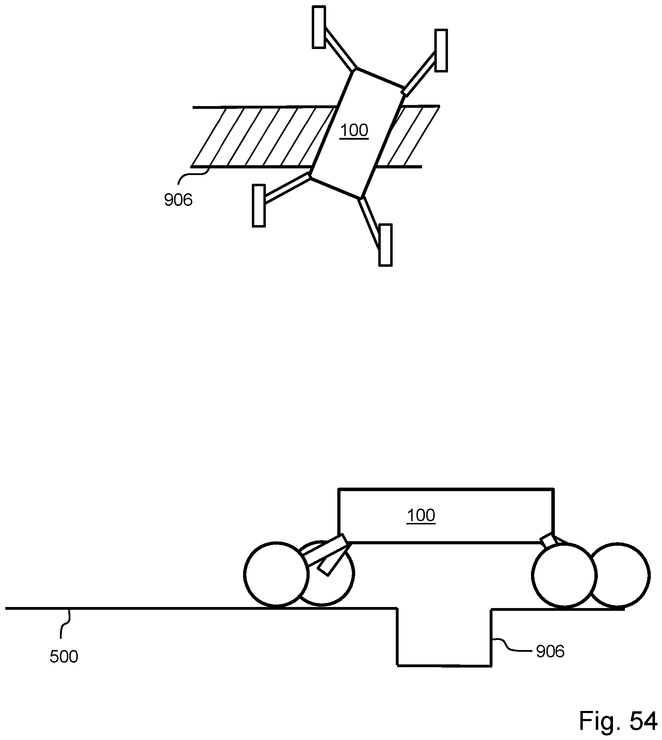

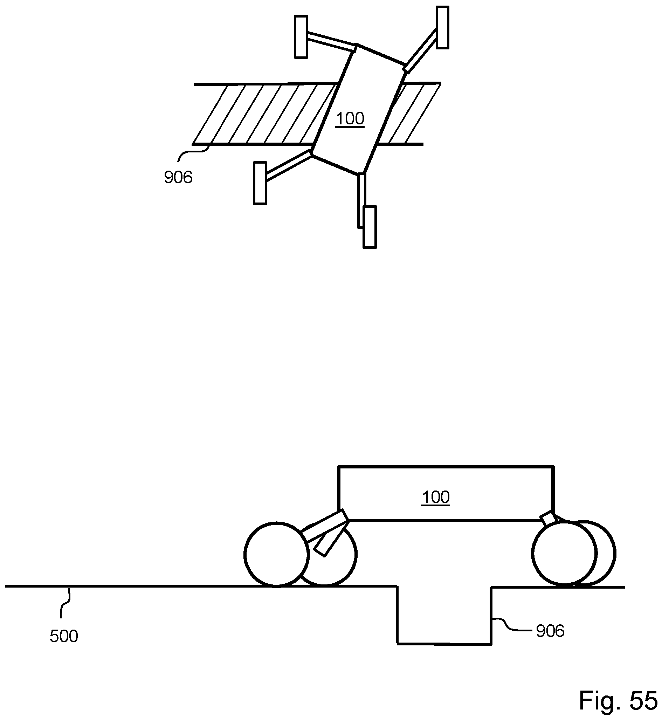

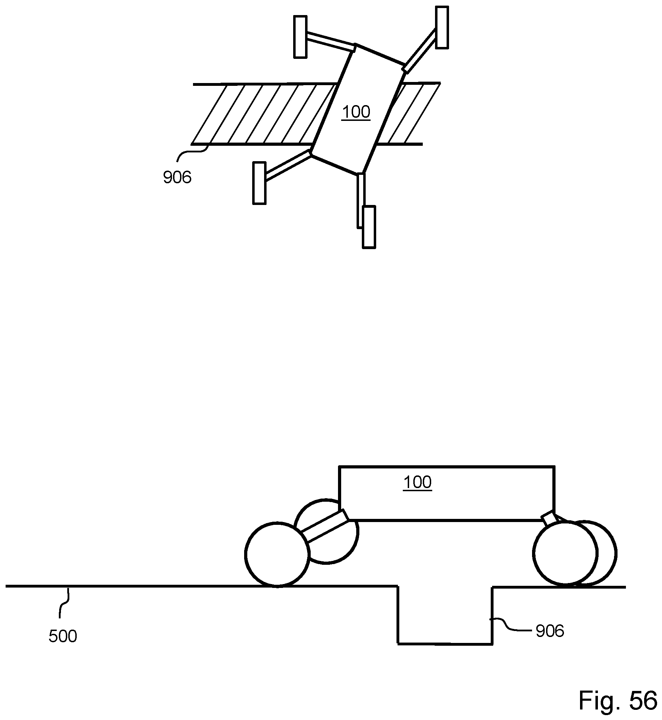

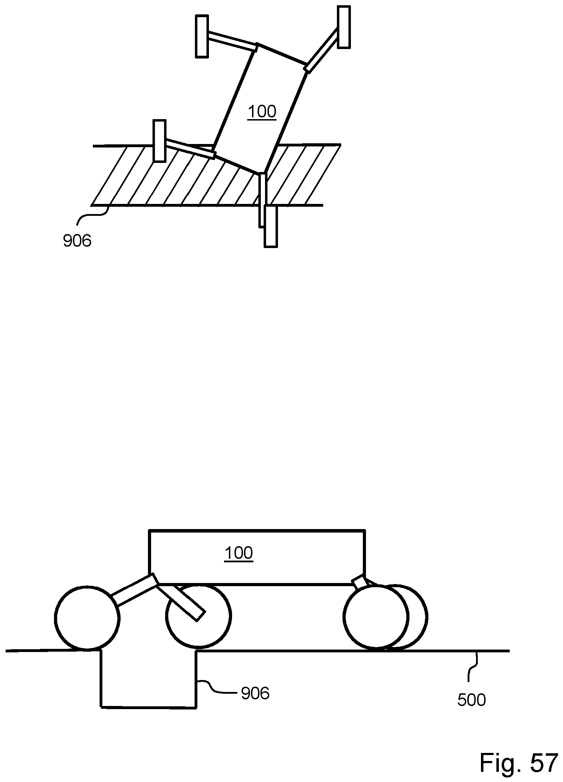

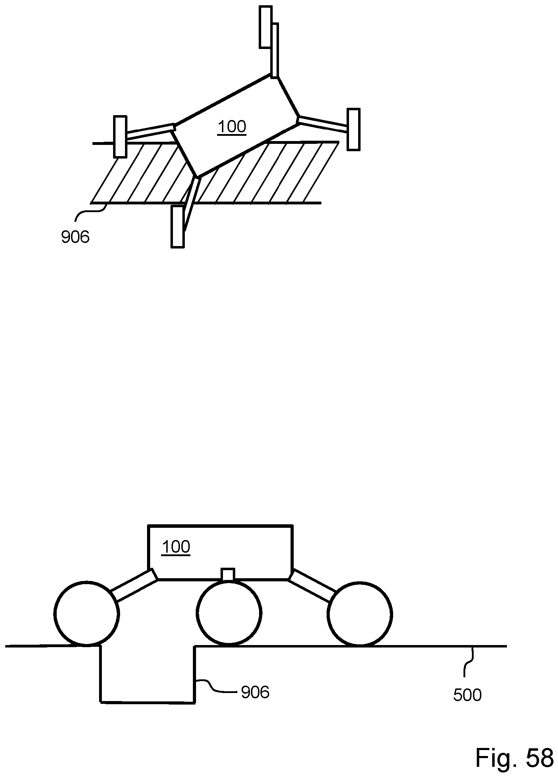

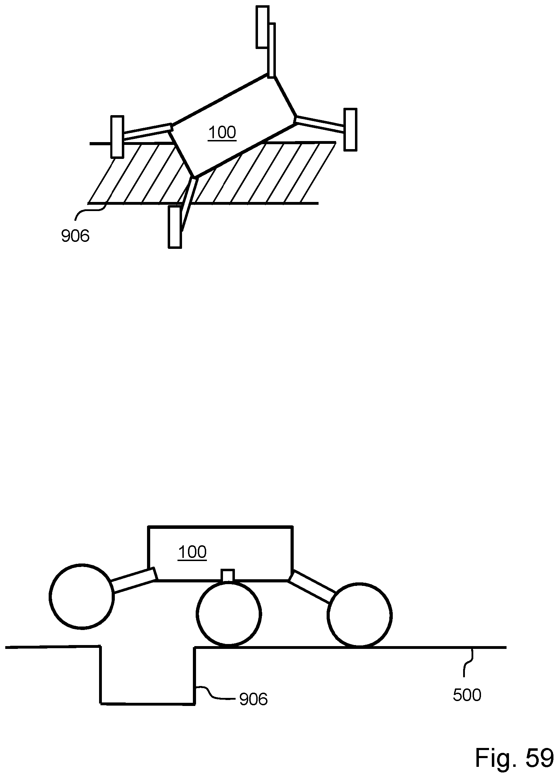

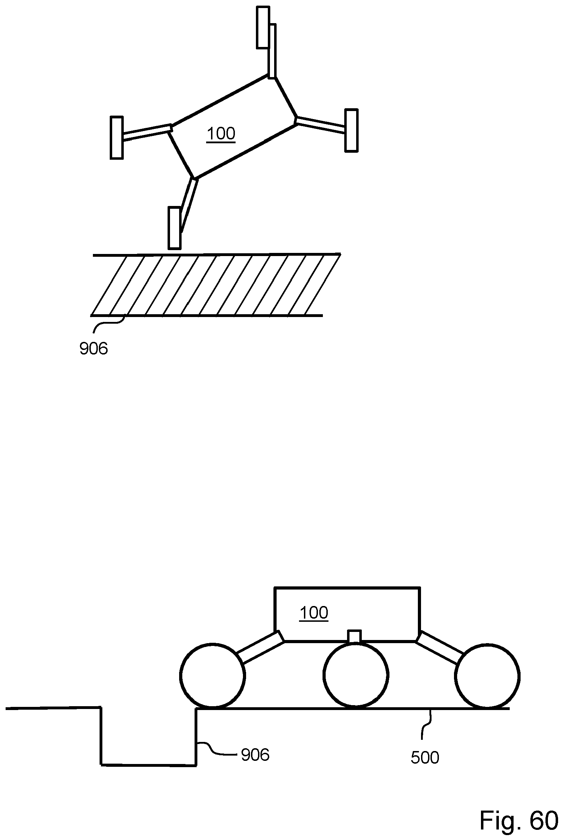

By way of a third non-limiting example of example 6, the first sequence of chassis suspension system configurations determined by the control system may comprise the following steps:
Step 6C-1: Maintain a first wheel arm and wheel in a fixed position (figure 49) (so that the vehicle 200 may, by rotating/driving the drive wheels, move forwards until the first wheel arm and wheel is across the gap 906 - figure 50);
Step 6C-2: Lower first wheel arm and wheel, raise second wheel arm and wheel (figure 51);
Step 6C-3: Steer grounded third wheel arm and wheel and fourth wheel arm and wheel to be orientated to a point just in front of the first wheel arm and wheel - figure 52 (so that the vehicle 200 may, by rotating/driving the drive wheels, pivot around first wheel arm and wheel while moving slightly forwards and keeping third wheel arm and wheel and fourth wheel arm and wheel in line with orientation point 908 - figure 53);
Step 6C-4: Place second wheel arm and wheel on ground - figure 54 (so that the vehicle 200 may, by rotating/driving the drive wheels, move forwards)
Step 6C-5: Move into secondary position configuration (figure 55);
Step 6C-6: Lift third wheel and wheel arm - figure 56 (so that the vehicle 200 may, by rotating/driving the drive wheels, move forwards)
Step 6C-7: place third wheel arm and wheel on same side of gap 906 as the first wheel arm and wheel and second wheel arm and wheel (figure 57);
Step 6C-8: Move into tertiary configuration position (figure 58);
Step 6C-9: Raise fourth wheel arm and wheel - figure 59 (so that the vehicle 200 may, by rotating/driving the drive wheels, move forwards);
Step 6C-10: place fourth wheel arm and wheel same side of gap 906 as the other wheel arms and wheels (figure 60);
Step 6C-11: Assume drive configuration (so that the vehicle 200 may, by rotating/driving the drive wheels, drive away).

The vehicle control system 600 is then operable to operate one or more of the wheel arm actuators 430, drive wheel mounting member actuators 440 chassis mounting member actuators 442 and/or drive wheel actuators 702 to perform the first sequence of chassis suspension system configurations as set out in steps 6C-1 to 6C-11 and perform the wheel drive operations described in steps 6C-1, 6C-3, 6C-4, 6C-6, 6C-9, 6C-11).

To perform the steps of example 6, the control system 600 may control the path taken by the respective wheel arm 402 relative to the chassis 200 during a motion of the wheel arm 402 between consecutive chassis suspension system configurations.

Additionally or alternatively, to perform the steps of example 6, the control system 600 may control the relative positioning of the drive wheel mounting member 416 relative to its respective wheel arm 402 during the motion of the respective wheel arm 402.

Additionally to perform the steps of example 6, the control system 600 may determine a **number n** of chassis displacement motions required to achieve the first objective (e.g. required perform the steps of example 6), where the **number n** has a value of at least one, and the or each chassis displacement motion is defined by a relative movement of the chassis 200 relative to the substrate 500.

The control system 600 may then operate one or more of the wheel arm actuators 430, drive wheel mounting member actuators 440, chassis mounting member actuators 442 and/or drive wheel actuator 702 to perform a chassis displacement motion while the vehicle is in one or more of the chassis suspension system configurations and perform the steps of example 6.

After the conclusion to the steps (e.g. of the first non-limiting example of example 6, the second non-limiting example of example 6 or the third non-limiting example of example 6), the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

### Example 7 - Limp Home

The first objective may be to move (e.g. translating, displacing) the chassis 200 from one location to another when one of the wheel arms and/or wheels is damaged.

For example, the vehicle control system 600 may receive a command to achieve a first objective. By way of a non limiting example, the first objective may be to travel from one location to another in a "limp" mode.

In response to receiving the command, the vehicle control system 600 is operable to determine a first sequence of chassis suspension system configurations required to achieve the first objective.

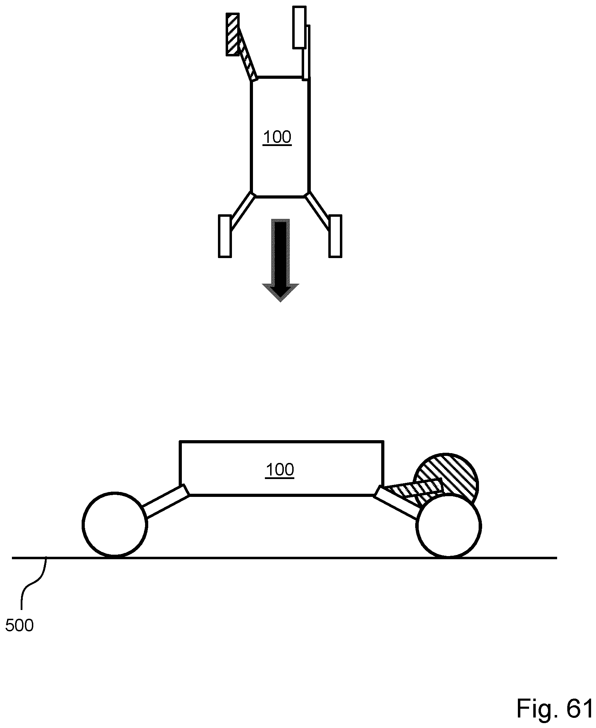

For example, the first sequence of chassis suspension system configurations determined by the control system may comprise the following steps (as shown in figure 61):
Step 7-1: raise a damaged wheel arm and/or wheel)
Step 7-2: draw in the closest wheel arm to the damaged wheel arm and wheel to be in alignment with the chassis (so that the vehicle may, by rotating the drive wheels, move itself along the substrate).

The vehicle control system 600 may then operate one or more of the wheel arm actuators 430, drive wheel mounting member actuators 440, chassis mounting member actuators 442 and/or drive wheel actuators 702 to perform the first sequence of chassis suspension system configurations as set out in steps 7-1, 7-2 and perform the wheel drive operation described in step 7-2).

After the conclusion to the steps, the control system 600 may determine (for example based on sensor data) whether the first objective has been achieved or not achieved (e.g. whether or not the vehicle/chassis in the correct pointing angle).

The control system 600 may then record and/or transmit a signal (i.e. data) indicating the result of the determination of whether the first objective has been achieved.

Common to all of the examples, in any sequence, it may be necessary to apply brakes to the wheels, apply a driving torque to the wheels, or adjust wheel 'toe angle' in order to control gross movement of the vehicle on terrain where each separate wheel is likely to see differing loads and resistances.

Hence there may be provided a remotely operated and/or autonomous vehicle which is operable to overcome the limitations of conventional vehicles when travelling across a wide range of terrains.

Hence there is provided a vehicle with enhanced operability compared to examples of the related art.

The provision of a control system which is operation to determine and combine chassis suspension system configurations and drive wheel operations provides a vehicle system configured to execute operations and thus achieve a mission objective not achievable by examples of the related art.

Such a vehicle may be advantageous as part of a weapon system (for example where the vehicle configured to carry a gun system).

In the examples in which a vehicle is provided with a weapon system, the vehicle controlled according to the present disclosure enables a relatively lightweight vehicular solution for delivering a weapon system to a firing position and then targeting the gun of the weapon system, compared to examples of the related art. This is achieved by using the chassis suspension system 400 to position a gun barrel of the weapon system towards a targeting position so that further adjustment, if needed, is only for elevation of the gun barrel, which may be done by a separate actuator or manually.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A vehicle comprising:
a chassis;
a chassis suspension system configured to support the chassis relative to a substrate, the chassis comprising a plurality of wheel arms, each wheel arm extending away from a different chassis mount on the chassis to a respective drive wheel, each drive wheel being pivotably mounted relative to its respective wheel arm, and
each wheel arm has a chassis mount end and a drive wheel mount end; the chassis mount end of each wheel arm is provided with a chassis mounting member, each chassis mounting member is provided with a chassis mounting member actuator to control the orientation of each wheel arm relative to the chassis; each wheel arm is provided with a wheel arm actuator to control the orientation of each wheel arm relative to the chassis; and the drive wheel mount end of each wheel arm is provided with a drive wheel mounting member, each drive wheel mounting member is provided with a drive wheel mounting member actuator to control the orientation of each drive wheel relative to its respective wheel arm;
the vehicle further comprising a control system operable to:
receive a command to achieve a first objective;
determine a first chassis suspension system configuration required to achieve the first objective, wherein the first chassis suspension system configuration is defined by a relative orientation of each of the wheel arms relative to the chassis and a relative orientation of each drive wheel mounting member relative to its respective wheel arm; and
operate one or more of the chassis mounting member actuators, wheel arm actuators and drive wheel mounting member actuators to achieve the first chassis suspension system configuration.

2. A vehicle as claimed in claim 1 wherein the control system is operable to:
determine a first sequence of chassis suspension system configurations required to achieve the first objective, wherein each chassis suspension system configuration is defined by a relative orientation of each of the wheel arms relative to the chassis and a relative orientation of each drive wheel mounting member relative to its respective wheel arm; and
operate one or more of the chassis mounting member actuators, wheel arm actuators and drive wheel mounting member actuators to perform the first sequence of chassis suspension system configurations.

3. A vehicle as claimed in claim 2 wherein the control system is operable to control the path taken by the respective wheel arm relative to the chassis during a motion of the wheel arm between consecutive chassis suspension system configurations and/or operable to control the relative positioning of the drive wheel mounting member relative to its respective wheel arm during the motion of the respective wheel arm.

4. A vehicle as claimed in claim 3 wherein the control system is operable to:
determine a **number n** of chassis displacement motions required to achieve the first objective, where the **number n** has a value of at least one, and the or each chassis displacement motion is defined by a relative movement of the chassis relative to the substrate.

5. A vehicle as claimed in claim 4 wherein each drive wheel is coupled to a drive wheel actuator configured to drive the drive wheel about a rotational axis; and
the control system is operable to operate one or more of the chassis mounting member actuators, wheel arm actuators, drive wheel mounting member actuators and/or drive wheel actuator to perform a chassis displacement motion while the vehicle is in one or more of the chassis suspension system configurations.

6. A vehicle as claimed in any one of claims 3 to 5 wherein the control system is operable to operate one or more of the chassis mounting member actuators, wheel arm actuators, drive wheel mounting member actuators and/or drive wheel actuator to achieve a chassis displacement motion during the motion of the respective wheel arm.

7. A vehicle as claimed in any one of claims 1 to 6 wherein:
the chassis extends along an x-axis, a first end of the chassis and a second end of the chassis spaced apart from one another along the x-axis; the chassis extending along a y-axis, a first side of the chassis and a second side of the chassis spaced apart from one another along the y-axis; the x-axis being at right angles to the y-axis;
the x-axis defining a chassis roll axis, the y-axis defining a chassis pitch axis and a z-axis defining a chassis yaw axis; the z-axis being perpendicular to the x-axis and y-axis;
wherein the control system is operable to control the transition between each consecutive chassis suspension system configuration to include rolling the chassis about the roll axis, pitching the chassis about the pitch axis and/or yawing the chassis about the yaw axis.

8. A vehicle as claimed in any one of claims 1 to 7 wherein the control system is operable to:
a. determine whether the first objective has been achieved; and
b. record and/or transmit a signal indicating the result of the determination whether the first objective has been achieved.

9. A vehicle as claimed in any one of claims 1 to 8 wherein the first objective is to position the vehicle at an orientation relative to a target object.

10. A vehicle as claimed in claim 9 further comprising:
a gun barrel having a barrel axis, the barrel being mounted to the chassis by a pivot mount, the barrel being pivotable relative to the x-axis about a pivot axis aligned with the y-axis and mounted such that it is constrained to move in a plane defined by the x-axis and z-axis;
wherein the first objective is to position the barrel towards an orientation to target an object.

11. A vehicle as claimed in any one of claims 1 to 8 wherein the first objective is to locate the vehicle inside a container or building, to climb a step or to cross a gap in the substrate.

12. A vehicle as claimed in any one of claims 1 to 11 wherein
the chassis mount end of each wheel arm and the chassis mounting member are pivotable relative to one another around a chassis mount pivoting axis; and the chassis mounting member is configured to support the chassis mount end of the wheel arm so that the wheel arm and chassis mounting member are operable to pivot relative to one another about the chassis mount pivoting axis.

13. A vehicle as claimed in claim 12 wherein:
the drive wheel mount end of each wheel arm and drive wheel mounting member are pivotable relative to one another around a drive wheel mount pivoting axis; and each drive wheel mounting member is configured to couple with the drive wheel mount end of the wheel arm so that each wheel arm and drive wheel mounting member are operable to pivot relative to one another about the drive wheel mount pivoting axis.

14. A vehicle as claimed in claim 13 wherein:
the chassis mount pivoting axis is parallel to the wheel mount pivoting axis, and the chassis mount pivoting axis is aligned and/or parallel to the z-axis.

15. A vehicle as claimed in claim 13 when dependent on claim 5 wherein:
the chassis mount end of the wheel arm is rotatably mounted relative to the chassis such that the wheel arm is rotatable about a chassis suspension axis which extends at right angles to the chassis mount pivoting axis;
the wheel mount end of the wheel arm is rotatably mounted relative to the wheel such that the wheel arm may rotate about a wheel suspension axis which extends at right angles to the wheel mount pivoting axis; and
wherein the drive wheel rotational axis, chassis suspension axis and/or wheel suspension axis are parallel to and/or aligned with an x-y plane defined by the x-axis and y-axis.
